# EUROPEAN PATENT APPLICATION

(11) **EP 3 979 569 A1**
(43) Date of publication of application: **06.04.2022**
(21) Application number: 20835124.7
(22) Date of filing: 30.06.2020
(51) Int. Cl.: H04L 12/28, H04L 12/723

(54) **PACKET FORWARDING METHOD AND PACKET PROCESSING METHOD AND APPARATUS**

(30) Priority: 01.07.2019 CN 201910585491
(71) Applicant: HUAWEI TECHNOLOGIES CO., LTD., Shenzhen, Guangdong 518129 (CN)
(72) Inventor: DU, Zongpeng, Shenzhen, Guangdong 518129 (CN); DONG, Jie, Shenzhen, Guangdong 518129 (CN); CHANG, Xiaodong, Shenzhen, Guangdong 518129 (CN)
(74) Representative: Maiwald Patent- und Rechtsanwaltsgesellschaft mbH
(86) International application number: PCT/CN2020/099175
(87) International publication number: WO 2021/000848

(57) **Abstract**

Embodiments of this application disclose a packet forwarding method. A head node, for example, a first network device that does not belong to a first domain, may receive a segment identifier sent by a second network device. The segment identifier may be used to indicate that the second network device can provide a first forwarding path from the second network device to a network device in the first domain. After obtaining a packet, the first network device may generate, based on the segment identifier, a segment identifier list corresponding to a second forwarding path that is used to forward the packet and that passes through the first domain, and forward the packet to the second network device based on the segment identifier list. The segment identifier list corresponding to the second forwarding path includes the segment identifier. Because the second network device has a capability of providing the first forwarding path from the second network device to the network device in the first domain, after the packet is forwarded to the second network device, the second network device may forward the packet in the first domain along the first forwarding path based on the segment identifier carried in the segment identifier list.

## Description

This application claims priority to Chinese Patent Application No. 201910585491.3, filed with the China National Intellectual Property Administration on July 1, 2019 and entitled "PACKET FORWARDING METHOD, PACKET PROCESSING METHOD, AND APPARATUS", which is incorporated herein by reference in its entirety.

### TECHNICAL FIELD

This application relates to the field of network communications, and in particular, to a packet forwarding method, a packet processing method, and an apparatus.

### BACKGROUND

During actual application, some packets may pass through a plurality of domains in a forwarding process. For example, when a network device that does not belong to a first domain forwards a packet, a corresponding forwarding path may pass through a network device in the first domain. In other words, the packet passes through at least the first domain and another domain different from the first domain in a forwarding process. It may be understood that, before the network device that does not belong to the first domain forwards the packet, a forwarding path for forwarding the packet may be first calculated, and then the packet is forwarded based on the forwarding path.

However, the network device that does not belong to the first domain may not know a network topology structure of network devices in the first domain. Therefore, before calculating the forwarding path, the network device that does not belong to the first domain cannot generate a forwarding path corresponding to the packet in the first domain based on a network topology structure obtained by the network device, but needs to send a request to a related controller, and then obtain the forwarding path corresponding to the packet in the first domain through calculation based on content returned by the related controller, to complete packet forwarding. To be specific, in the conventional technology, to implement cross-domain forwarding of a packet, a head node (for example, the foregoing network device that does not belong to the first domain) needs to interact with a related controller, that is, depend on the related controller, to obtain a forwarding path corresponding to the packet in the first domain through calculation, and further obtain a complete packet forwarding path, to complete packet forwarding. Consequently, an entire packet forwarding control procedure is complex. In addition, the cross-domain forwarding of the packet cannot be implemented without a controller.

### SUMMARY

Embodiments of this application provide a packet forwarding method, a packet processing method, an apparatus, and a related device, to resolve problems that an entire packet forwarding control procedure is complex because a head node for cross-domain packet forwarding depends on interaction with a controller, and the cross-domain packet forwarding cannot be implemented without a controller in the conventional technology.

According to a first aspect, an embodiment of this application provides a packet forwarding method. A head node may receive a segment identifier sent by a second network device, the head node is a first network device that does not belong to a first domain, and the segment identifier is used to indicate that the second network device can provide a first forwarding path from the second network device to a network device in the first domain. After the first network device receives the segment identifier, if a path corresponding to the first network device when the first network device forwards a first packet passes through the network device in the first domain, after the first network device obtains the first packet, a segment identifier list corresponding to a second forwarding path that is used to forward the first packet and that passes through the first domain may be generated based on the segment identifier. The segment identifier list corresponding to the second forwarding path includes the segment identifier. After generating the segment identifier list corresponding to the second forwarding path, the first network device may forward the first packet based on the segment identifier list. It may be understood that although the first network device does not know a network topology structure of the first domain, because the foregoing segment identifier indicates that the second network device can provide the first forwarding path from the second network device to the network device in the first domain, in this embodiment of this application, the first network device may forward the first packet to the second network device based on the segment identifier list that includes the segment identifier, and the second network device has a capability of providing the first forwarding path from the second network device to the network device in the first domain. Therefore, after the first packet is forwarded to the second network device, the second network device may forward the first packet in the first domain based on the first forwarding path. Specifically, in a process of forwarding a packet, a network device that receives the packet may forward the packet based on a segment identifier list that is carried in the packet and that indicates a forwarding path. However, the first packet received by the second network device does not carry a segment identifier list of a forwarding path in the first domain. Therefore, to forward the first packet in the first domain, before the second network device forwards the first packet, the segment identifier that is carried in the first packet and that is used to indicate that the second network device can provide the first forwarding path from the second network device to the network device in the first domain is replaced with the segment identifier list of the first forwarding path, to generate the second packet. Then, the second packet that carries the segment identifier list of the first forwarding path is forwarded along the first forwarding path. It can be learned that, according to the solutions provided in the embodiments of this application, when a packet forwarded by the first network device that does not belong to the first domain passes through the network device in the first domain, the first network device can complete packet forwarding without interacting with a related controller. In this way, an entire packet forwarding control procedure is simple, and cross-domain packet forwarding can be implemented without a controller.

In a possible implementation, during actual application, the first forwarding path from the second network device to the network device in the first domain may have corresponding network performance. In addition, when forwarding the first packet to the network device in the first domain, the first network device may also have a corresponding network performance requirement. In view of this, in an implementation of this embodiment of this application, in addition to indicating that the second network device can provide the first forwarding path from the second network device to the network device in the first domain, the segment identifier may be further used to indicate the network performance corresponding to the first forwarding path. In this way, when determining the second forwarding path, the first network device may determine the network performance requirement for forwarding the first packet, and determine a second forwarding path that can meet the network performance requirement based on the network performance requirement.

In a possible implementation, the network performance requirement may be any one or a combination of a delay, bandwidth, load balancing, and path disjoint. The network performance requirement is the delay, for example, may be a delay as low as possible during first packet forwarding, namely, a low delay. The network performance requirement is the bandwidth, for example, exclusive bandwidth. The network performance requirement is the load balancing. For example, when there are a plurality of forwarding paths for forwarding the first packet, a forwarding path for forwarding the first packet may be determined with reference to load statuses of the forwarding paths.

In a possible implementation, the segment identifier indicating that the second network device can provide the first forwarding path from the second network device to the network device in the first domain may be a binding segment identifier indicating that the second network device can provide the first forwarding path from the second network device to the network device in the first domain.

In a possible implementation, the second network device may send a link state packet message to the first network device. The link state packet message is used to indicate reachability between the second network device and the network device in the first domain. The foregoing segment identifier may be carried in the link state packet message. Therefore, the first network device may determine the segment identifier by using the link state packet message, to determine that the second network device can provide the first forwarding path from the second network device to the network device in the first domain.

In a possible implementation, the segment identifier may be carried in a specific field of the link state packet message. The specific field may be, for example, in an extended Internet protocol IP reachability field of the link state packet message. For example, a sub-TLV field may be added to the foregoing extended Internet protocol IP reachability field, and the foregoing segment identifier is carried in the sub-TLV field. In this way, the first network device may determine the segment identifier based on content of the specific field in the link state packet message, to determine that the second network device can provide the first forwarding path from the second network device to the network device in the first domain. It may be understood that, by adding the segment identifier to the extended Internet protocol IP reachability field, more abundant messages such as path bandwidth and delay information may be carried by using another sub-TLV field, to facilitate subsequent corresponding function extension.

In a possible implementation, if the first domain is an optical domain, the first forwarding path from the second network device to the network device in the first domain may be an optical path, that is, a forwarding path in an optical network. If the first domain is an IGP domain or an AS domain, the first forwarding path from the second network device to the network device in the first domain may be a forwarding path in a segment routing network.

In a possible implementation, the first network device may belong to a second domain. Both the first domain and the second domain may be IGP domains; or the first domain may be an optical domain, and the second domain may be an IP domain; or both the first domain and the second domain may be autonomous system domains.

According to a second aspect, an embodiment of this application provides a packet processing method. Specifically, a second network device generates a segment identifier, the segment identifier indicates that the second network device can provide a first forwarding path from the second network device to a network device in a first domain, and a first network device does not belong to the first domain. The second network device sends the segment identifier to the first network device. The second network device receives a first packet sent by the first network device, where a segment identifier list of the first packet includes the segment identifier. The second network device replaces the segment identifier in the segment identifier list with a segment identifier list corresponding to the first forwarding path, to generate a second packet. The second network device forwards the second packet along the first forwarding path. When a packet forwarded by the first network device that does not belong to the first domain passes through the network device in the first domain, the first network device can complete packet forwarding without interacting with a related controller. In this way, an entire packet forwarding control procedure is simple, and cross-domain packet forwarding can be implemented without a controller.

In a possible implementation, that the second network device sends the segment identifier to the first network device includes: The second network device sends a link state packet message to the first network device, where the link state packet message carries the segment identifier.

In a possible implementation, the segment identifier is carried in an extended Internet protocol IP reachability field of the link state packet message.

In a possible implementation, after receiving the first packet, the second network device may determine, based on the segment identifier carried in the first packet, that the first packet needs to be forwarded in the first domain by using the first forwarding path. Specifically, the second network device may obtain the first forwarding path from the second network device to the network device in the first domain, and establish a mapping relationship between the first forwarding path and the segment identifier, to determine, based on the mapping relationship, the first forwarding path corresponding to the segment identifier carried in the received first packet, so as to forward the first packet in the first domain based on the first forwarding path.

In a possible implementation, the segment identifier list may indicate a packet to be forwarded along a specific path. Therefore, the second network device may generate a segment identifier list corresponding to the first forwarding path, and establish a mapping relationship between the segment identifier list of the first forwarding path and the segment identifier.

In a possible implementation, an outbound interface corresponding to a packet forwarding path may indicate a packet to be forwarded along a specific path. Therefore, the second network device may determine an outbound interface corresponding to the first forwarding path, and establish a mapping relationship between the outbound interface corresponding to the first forwarding path and the segment identifier.

In a possible implementation, if the segment identifier may be further used to indicate network performance corresponding to the first forwarding path, the first forwarding path obtained before the second network device establishes the mapping relationship between the first forwarding path and the segment identifier may be a first forwarding path that is from the second network device to the network device in the first domain and that has the network performance indicated by the segment identifier.

In a possible implementation, a network performance requirement for forwarding the first packet may be any one or a combination of a delay, bandwidth, load balancing, and path disjoint.

In a possible implementation, considering that a network topology structure of the network device in the first domain may change, in this embodiment of this application, the second network device may monitor the network topology structure of the network device in the first domain in real time. If the second network device establishes the mapping relationship between the first forwarding path and the segment identifier before sending the segment identifier to the first network device, the topology structure of the network device in the first domain changes within a time difference from a time point at which the first network device receives the segment identifier to a time point at which the first network device forwards the first packet carrying the segment identifier to the second network work, or after the first network device forwards the first packet to the second network device. In this way, the first forwarding path may no longer meet the network performance of the first forwarding path indicated by the segment identifier. In this case, the second network device may re-obtain a first forwarding path from the second network device to the network device in the first domain based on the network performance, and update the previously established mapping relationship between the first forwarding path and the segment identifier, that is, establish a mapping relationship between the segment identifier and the re-determined first forwarding path. In this way, when receiving the first packet carrying the segment identifier, the second network device may determine, based on the updated mapping relationship, the first forwarding path having the network performance, to forward the first packet in the first domain based on the first forwarding path.

In a possible implementation, during actual application, the second network device may provide a plurality of first forwarding paths from the second network device to the network device in the first domain, network performance corresponding to the plurality of first forwarding paths may be the same or different. In an implementation, the segment identifier may be used to indicate that the second network device can provide a plurality of first forwarding paths from the second network to the network device in the first domain, and network performance separately corresponding to the plurality of forwarding paths. In this embodiment of this application, to enable the second network device to determine, from the plurality of first forwarding paths, the first forwarding path that meets the network performance requirement of the first packet forwarded by the first network device, the first packet forwarded by the first network device to the second network device may further carry a network performance requirement of a second forwarding path. In this way, after receiving the first packet sent by the first network device, the second network device may obtain, based on the network performance requirement of the second forwarding path carried in the first packet and the network performance indicated in the segment identifier carried in the first packet, the first forwarding path that is from the second network device to the network device in the first domain and that has the network performance matching the network performance requirement of the second forwarding path, and forward the first packet in the first domain based on the first forwarding path that is from the second network device to the network device in the first domain and that has the network performance matching the network performance requirement of the second forwarding path.

In a possible implementation, the network performance requirement of the second forwarding path may be carried in a specific field of the first packet. If the first packet forwarded by the first network device to the second network device is an SRv6 packet, the network performance requirement of the second forwarding path may be carried in a SID of the SRv6 packet, or the network performance requirement of the second forwarding path may be carried in a TLV field of a segment routing header SRH of the SRv6 packet.

In a possible implementation, when the network performance requirement forwarded by the first network device to the second network device is load balancing, the second network device may obtain all forwarding paths from the second network device to the network device in the first domain. If there are a plurality of the obtained forwarding paths, the second network device may select, based on load statuses of the plurality of forwarding paths, one forwarding path as the first forwarding path used to forward the first packet, to forward the first packet to the network device in the first domain by using the first forwarding path that meets the network performance requirement.

In a possible implementation, the forwarding path from the second network device to the network device in the first domain is an optical path or a forwarding path in a segment routing network.

In a possible implementation, the first network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

According to a third aspect, an embodiment of this application provides a network device. The network device includes: a receiving unit, configured to receive a segment identifier sent by a second network device, where the segment identifier indicates that the second network device can provide a first forwarding path from the second network device to a network device in a first domain, and the network device does not belong to the first domain; an obtaining unit, configured to obtain a packet; a determining unit, configured to determine a second forwarding path for forwarding the packet, where the second forwarding path passes through the first domain; a generation unit, configured to generate a segment identifier list corresponding to the second forwarding path, where the segment identifier list includes the segment identifier; and a forwarding unit, configured to forward the packet to the second network device based on the segment identifier list.

In a possible implementation, the segment identifier is further used to indicate network performance corresponding to the first forwarding path that can be provided by the second network device; and the determining unit is specifically configured to: determine a network performance requirement for forwarding the packet, and determine the second forwarding path based on the network performance requirement, where the network performance corresponding to the first forwarding path meets the network performance requirement.

In a possible implementation, the network performance requirement includes at least one of the following: a delay, bandwidth, load balancing, and path disjoint.

In a possible implementation, the segment identifier is a binding segment identifier.

In a possible implementation, the receiving unit is specifically configured to receive a link state packet message sent by the second network device, where the link state packet message carries the segment identifier.

In a possible implementation, the segment identifier is carried in an extended Internet protocol IP reachability field of the link state packet message.

In a possible implementation, the first forwarding path is an optical path or a forwarding path in a segment routing network.

In a possible implementation, the network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

According to a fourth aspect, an embodiment of this application provides a network device. The network device includes: a generation unit, configured to generate a segment identifier, where the segment identifier indicates that the network device can provide a first forwarding path from the network device to a network device in a first domain; a sending unit, configured to send the segment identifier to a first network device, where the first network device does not belong to the first domain; a receiving unit, configured to receive a first packet sent by the first network device, where a segment identifier list of the first packet includes the segment identifier; a replacement unit, configured to replace the segment identifier in the segment identifier list with a segment identifier list corresponding to the first forwarding path, to generate a second packet; and a forwarding unit, configured to forward the second packet along the first forwarding path.

In a possible implementation, the sending unit is specifically configured to send a link state packet message to the first network device, where the link state packet message carries the segment identifier.

In a possible implementation, the segment identifier is carried in an extended Internet protocol IP reachability field of the link state packet message.

In a possible implementation, the network device further includes: a first obtaining unit, configured to obtain the first forwarding path from the network device to the network device in the first domain; and an establishment unit, configured to establish a mapping relationship between the first forwarding path and the segment identifier.

In a possible implementation, the establishment unit is specifically configured to generate the segment identifier list corresponding to the first forwarding path, where the mapping relationship is a mapping relationship between the segment identifier list corresponding to the first forwarding path and the segment identifier.

In a possible implementation, the establishment unit is specifically configured to determine an outbound interface corresponding to the first forwarding path, and establish a mapping relationship between the outbound interface corresponding to the first forwarding path and the segment identifier.

In a possible implementation, the segment identifier is further used to indicate network performance corresponding to the first forwarding path that is from the network device to the network device in the first domain and that can be provided by the network device; and the first obtaining unit is specifically configured to obtain the first forwarding path that has the network performance and that is from the network device to the network device in the first domain.

In a possible implementation, a network performance requirement includes at least one of the following: a delay, bandwidth, load balancing, and path disjoint.

In a possible implementation, the network device further includes: a second obtaining unit, configured to: when the network device determines that the first forwarding path to the network device in the first domain does not have the network performance, re-obtain, based on the network performance, a first forwarding path to the network device in the first domain; and an updating unit, configured to update the mapping relationship based on the re-obtained first forwarding path to the network device in the first domain.

In a possible implementation, the first packet includes a network performance requirement of a second forwarding path, the second forwarding path is a forwarding path that is determined by the first network device and that is used to forward the first packet, and the first obtaining unit is specifically configured to obtain the first forwarding path that is from the network device to the network device in the first domain and that has the network performance matching the network performance requirement of the second forwarding path.

In a possible implementation, the first packet is an SRv6 packet, and the network performance requirement of the second forwarding path is carried in a segment identifier SID of a segment routing header SRH or in a type-length-value TLV field of a segment routing header SRH of the SRv6 packet.

In a possible implementation, if the network performance is load balancing, and the network device obtains a plurality of forwarding paths to the network device in the first domain, the network device further includes a selection unit, configured to select one of the plurality of forwarding paths as the first forwarding path based on load of each of the plurality of forwarding paths.

In a possible implementation, the segment identifier is a binding segment identifier.

In a possible implementation, the forwarding path from the network device to the network device in the first domain is an optical path or a forwarding path in a segment routing network.

In a possible implementation, the first network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

According to a fifth aspect, an embodiment of this application provides a network device. The network device includes a processor and a memory. The memory is configured to store instructions. The processor is configured to execute the instructions in the memory, to perform the method according to any one of the first aspect or the possible implementations of the first aspect.

According to a sixth aspect, an embodiment of this application provides a network device. The network device includes a processor and a memory. The memory is configured to store instructions. The processor is configured to execute the instructions in the memory, to perform the method according to any one of the second aspect or the possible implementations of the second aspect.

According to a seventh aspect, an embodiment of this application provides a computer-readable storage medium, including instructions. When the instructions are run on a computer, the computer is enabled to perform the method according to any one of the first aspect or the possible implementations of the first aspect.

According to an eighth aspect, an embodiment of this application provides a computer-readable storage medium, including instructions. When the instructions are run on a computer, the computer is enabled to perform the method according to any one of the second aspect or the possible implementations of the second aspect.

According to a ninth aspect, an embodiment of this application provides a computer program product including instructions. When the computer program product is run on a computer, the computer is enabled to perform the method according to any one of the first aspect or the possible implementations of the first aspect.

According to a tenth aspect, an embodiment of this application provides a computer program product including instructions. When the computer program product is run on a computer, the computer is enabled to perform the method according to any one of the second aspect or the possible implementations of the second aspect.

### BRIEF DESCRIPTION OF DRAWINGS

FIG. 1 is a schematic diagram of an application scenario in the conventional technology;
FIG. 2 is a schematic diagram of another application scenario in the conventional technology;
FIG. 3 is a signaling interaction diagram of a packet forwarding method according to an embodiment of this application;
FIG. 4 is a signaling interaction diagram of a packet forwarding method according to an embodiment of this application;
FIG. 5A and FIG. 5B are a signaling interaction diagram of a packet forwarding method according to an embodiment of this application;
FIG. 6 is a signaling interaction diagram of a packet forwarding method according to an embodiment of this application;
FIG. 7 is a schematic diagram of a structure of a network device according to an embodiment of this application;
FIG. 8 is a schematic diagram of a structure of another network device according to an embodiment of this application; and
FIG. 9 is a schematic diagram of a structure of still another network device according to an embodiment of this application.

### DESCRIPTION OF EMBODIMENTS

Embodiments of this application provide a packet forwarding method, to resolve problems that an entire packet forwarding control procedure is complex because a head node for cross-domain packet forwarding depends on interaction with a controller, and the cross-domain packet forwarding cannot be implemented without a controller in the conventional technology.

For ease of understanding, an application scenario in which the foregoing problems exist in the conventional technology is first described.

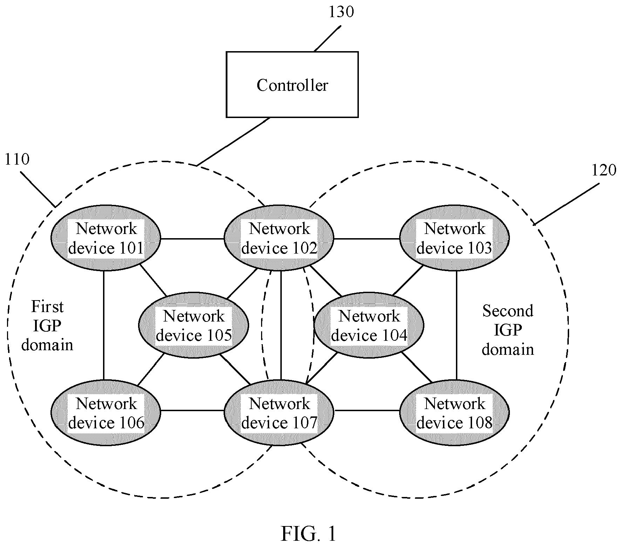

FIG. 1 is a schematic diagram of an application scenario in the conventional technology. In the scenario shown in FIG. 1, network devices 101, 102, 105, 106, and 107 belong to one interior gateway protocol (Interior Gateway Protocol, IGP) domain (namely, a first IGP domain 110 shown in FIG. 1), and network devices 102, 103, 104, 107, and 108 belong to another IGP domain (namely, a second IGP domain 120 shown in FIG. 1). The network device 101 is separately connected to the network device 102, the network device 105, and the network device 106. The network device 102 is separately connected to the network device 101, the network device 103, the network device 104, the network device 105, and the network device 105. The network device 103 is separately connected to the network device 102, the network device 104, and the network device 108. The network device 104 is separately connected to the network device 102, the network device 103, the network device 107, and the network device 108. The network device 105 is separately connected to the network device 101, the network device 102, the network device 106, and the network device 107. The network device 106 is separately connected to the network device 101, the network device 105, and the network device 107. The network device 107 is separately connected to the network device 102, the network device 104, the network device 105, the network device 106, and the network device 108. The network device 108 is separately connected to the network device 103, the network device 104, and the network device 107. The network device 102 and the network device 107 are cross-domain devices, that is, the network device 102 and the network device 107 belong to both the first IGP domain 110 and the second IGP domain 120.

If a network device such as the network device 101 in the first IGP domain 110 needs to forward a packet to a network device such as the network device 103 in the second IGP domain 120, because the network device 101 and the network device 103 are located in different domains, the network device 101 does not know a network topology structure of the second IGP domain 120 in which the network device 103 is located. Therefore, if the network device 101 needs to calculate a forwarding path for forwarding the packet to the network device 103, the network device 101 may send a request to a controller 130 such as a network cloud engine (network cloud engine, NCE). After receiving the request, the controller 130 calculates a segment identifier list (segment ID list, SID list) from the network device 101 to the network device 103 based on topology information of the second IGP domain 120 and topology information of the first IGP domain 110 that are collected by the controller 130, and sends the segment identifier list to the network device 101. The network device 101 forwards the packet based on the received SID list.

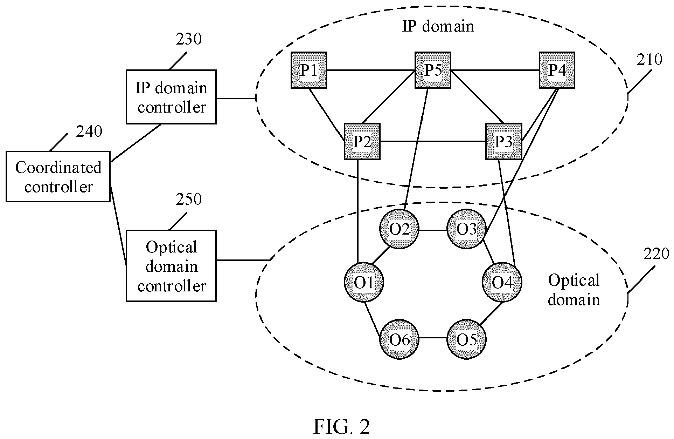

FIG. 2 is a schematic diagram of another application scenario in the conventional technology. In the scenario shown in FIG. 2, a network device P1, a network device P2, a network device P3, a network device P4, and a network device P5 belong to an Internet protocol (Internet Protocol, IP) domain 210. A network device O1, a network device O2, a network device O3, a network device O4, a network device O5, and a network device O6 belong to an optical domain 220. A network device in the optical domain 220 performs communication by using an optical network resource. As shown in FIG. 2, the network device P1 is separately connected to the network device P2 and the network device P5. The network device P2 is separately connected to the network device P3, the network device P5, and the network device O1. The network device P3 is separately connected to the network device P2, the network device P4, the network device P5, and the network device O4. The network device P4 is separately connected to the network device P3, the network device P5, and the network device O3. The network device P5 is separately connected to the network device P2, the network device P3, the network device P4, and the network device O2. The network device O1 is separately connected to the network device P2, the network device O2, and the network device O6. The network device O2 is separately connected to the network device P5, the network device O1, and the network device O3. The network device O3 is separately connected to the network device P4, the network device O2, and the network device O4. The network device O4 is separately connected to the network device P3, the network device O3, and the network device O5. The network device O5 is separately connected to the network device O4 and the network device O6. The network device O6 is separately connected to the network device O1 and the network device O5.

If a packet forwarded by a network device such as the network device P1 in the IP domain 210 to the network device P4 in the IP domain 210 needs to pass through a network device in the optical domain 220, because the network device P1 does not belong to the optical domain 220, the network device P1 does not know a network topology structure of the optical domain 220. Therefore, in the conventional technology, if the network device P1 needs to specify a forwarding path of the packet in the optical domain 220, the network device P1 needs to guide packet forwarding based on a SID list that includes an optical path segment identifier SID. The SID list may be obtained through calculation by an IP controller 230. Therefore, first, the network device 101 may send a request to the IP domain controller 230 such as an IP domain NCE. If the IP domain controller 230 determines that a corresponding optical path does not exist, the IP controller 230 needs to trigger creation of the forwarding path of the packet in the optical domain 220. Specifically, in an example, after receiving the request of the network device 101, the IP domain controller 230 may further send a request to a coordinated controller 240. The coordinated controller 240 sends the request to an optical domain controller 250 to create an optical path, and then the optical domain controller 250 feeds back a related optical path SID to the coordinated controller 240. The coordinated controller 240 feeds back the optical path SID to the IP domain controller 230, and the IP domain controller 230 calculates a SID list corresponding to a complete packet forwarding path (namely, an IP domain->optical domain->IP domain forwarding path) based on link information of the IP domain and collected information related to the optical path SID, to implement the packet forwarding. If the IP domain controller 230 determines that a corresponding optical path exists, the IP domain controller 230 directly uses a SID of the existing optical path and link information of the IP domain to calculate a SID list corresponding to a complete packet forwarding path (namely, an IP domain->optical domain->IP domain forwarding path), to implement the packet forwarding. The coordinated controller 240 may be considered as a bridge for communication between the IP domain controller 230 and the optical domain controller 250. The coordinated controller 240 may not only send related information that is of the optical domain 220 and that is obtained from the optical domain controller 250, for example, path information of the optical domain 220, to the IP domain controller 230, but also send related information that is of the IP domain 210 and that is obtained from the IP domain controller 230, for example, path requirement information of the IP domain 210, to the optical domain controller 250. Certainly, the coordinated controller 240 may further have other functions, which are not described herein.

It can be learned from the foregoing description that, in the conventional technology, to implement cross-domain packet forwarding, a head node (for example, the network device 101 in FIG. 1 or the network device P1 in FIG. 2) needs to interact with a related controller, to obtain a complete packet forwarding path, to further complete packet forwarding. Consequently, an entire packet forwarding control procedure is complex, and cross-domain packet forwarding cannot be implemented without a controller.

In view of this, an embodiment of this application provides a packet forwarding method, to resolve the foregoing problem.

It should be noted that the foregoing scenarios are merely shown for ease of understanding, and the embodiments of this application may be further applied to other scenarios. Details are not described herein again.

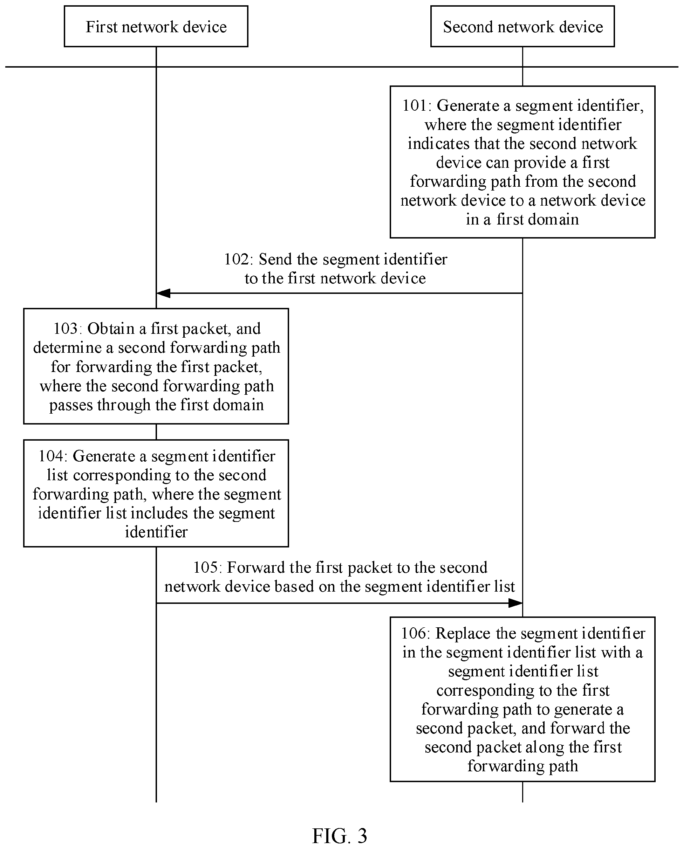

FIG. 3 is a signaling interaction diagram of a packet forwarding method according to an embodiment of this application. The packet forwarding method provided in this embodiment of this application may be implemented, for example, by using the following steps 101 to 105.

Step 101: A second network device generates a segment identifier, where the segment identifier indicates that the second network device can provide a first forwarding path from the second network device to a network device in a first domain.

In this embodiment of this application, the second network device is a cross-domain device, and the second network device can provide the first forwarding path from the second network device to the network device in the first domain. In other words, the second network device belongs to the first domain. For example, in the scenario shown in FIG. 1, the second network device may be the network device 102 or the network device 107. For the scenario shown in FIG. 2, a packet optical gateway (packet optical gateway, POG) in the first domain (that is, the optical domain 220) can learn of network information of the first domain. Therefore, in an implementation of this embodiment of this application, the second network device may be a POG. The POG may be, for example, the network device P2, P3, P4, or P5 shown in FIG. 2.

Step 102: The second network device sends the segment identifier to a first network device.

In this embodiment of this application, the second network device can provide the first forwarding path from the second network device to the network device in the first domain, and the second network device may generate the segment identifier SID indicating that the second network device has a function of providing the first forwarding path from the second network device to the network device in the first domain, and send the segment identifier to the first network device that does not belong to the first domain. In this way, if the first network device needs to forward a packet to the network device in the first domain, the first network device may determine, based on the segment identifier, the first forwarding path for the packet from the second network device to the network device in the first domain.

It should be noted that, the segment identifier indicating that the second network device can provide the first forwarding path from the second network device to the network device in the first domain is not specifically limited in this embodiment of this application. In an example, the segment identifier may be a binding segment identifier (binding segment id, BSID) indicating that the second network device can provide the first forwarding path from the second network device to the network device in the first domain.

It should be noted that in this embodiment of this application, the first network device does not belong to the first domain. In an implementation of this embodiment of this application, the first network device may belong to a second domain. The first domain and the second domain are not specifically limited in this embodiment of this application. In an example, both the first domain and the second domain may be IGP domains. For example, the first domain is the second IGP domain 120 shown in FIG. 1, and the second domain is the first IGP domain 110 shown in FIG. 1. In another example, the first domain may be an optical domain, and the second domain may be an IP domain. For example, the first domain is the optical domain 220 shown in FIG. 2, and the second domain is the IP domain 210 shown in FIG. 2. In still another example, both the first domain and the second domain may be autonomous system (autonomous system, AS) domains. Certainly, the foregoing descriptions are merely examples of the first domain and the second domain, and do not constitute a limitation on this embodiment of this application. The first domain and the second domain may further include other combinations. Details are not described herein.

It may be understood that if the first domain is an optical domain, the first forwarding path from the second network device to the network device in the first domain may be an optical path, that is, a forwarding path in an optical network. If the first domain is an IGP domain or an AS domain, the first forwarding path from the second network device to the network device in the first domain may be a forwarding path in a segment routing network.

A specific implementation in which the second network device sends the segment identifier to the first network device is not specifically limited in this embodiment of this application. In an example, the second network device may send a link state packet (link state packet, LSP) message to the first network device. The link state packet message is used to indicate reachability between the second network device and the network device in the first domain. In this embodiment of this application, the segment identifier may be carried in the link state packet message. For example, the segment identifier may be carried in a specific field of the link state packet message. The specific field is not specifically limited in this embodiment of this application. For example, the specific field may be an extended Internet protocol IP reachability (English: extended IP reachability) field in the link state packet message. For example, a sub-type-length-value (sub-type-length-value, sub-TLV) field may be added to the foregoing extended Internet protocol IP reachability field, and the foregoing segment identifier is carried in the sub-TLV field. In this way, the first network device may determine the segment identifier based on content of the specific field in the link state packet message, to determine that the second network device can provide the first forwarding path from the second network device to the network device in the first domain. It may be understood that, by adding the segment identifier to the extended Internet protocol IP reachability field, more abundant messages such as path bandwidth and delay information may be carried by using another sub-TLV field, to facilitate subsequent corresponding function extension.

Step 103: The first network device obtains a first packet, and determines a second forwarding path for forwarding the first packet, where the second forwarding path passes through the first domain.

Step 104: The first network device generates a segment identifier list corresponding to the second forwarding path, where the segment identifier list includes the segment identifier.

Step 105: The first network device forwards the first packet to the second network device based on the segment identifier list.

With respect to step 103 to step 105, it should be noted that in this embodiment of this application, when the first network device needs to send the first packet to the network device in the first domain, the first network device may first obtain the first packet, and determine the second forwarding path for forwarding the first packet to the network device in the first domain. An implementation in which the first network device obtains the first packet is not specifically limited in this embodiment of this application. The first network device may obtain the first packet from another device, for example, from a related server, or the first network device may generate the first packet. After obtaining the first packet, the first network device may determine the second forwarding path for forwarding the first packet, where the second forwarding path is a forwarding path for forwarding the first packet from the first network device to a destination node. After determining the second forwarding path, the first network device may generate the segment identifier list corresponding to the second forwarding path. The segment identifier list may include, for example, a segment identifier corresponding to each network device along the second forwarding path. In this embodiment of this application, the segment identifier list may further include the segment identifier indicating that the second network device can provide the first forwarding path from the second network device to the network device in the first domain. It may be understood that although the first network device may not know a network topology structure of the first domain, because the foregoing segment identifier indicates that the second network device can provide the first forwarding path from the second network device to the network device in the first domain, in this embodiment of this application, the first network device may forward the first packet to the second network device based on the segment identifier list that includes the segment identifier. Specifically, the first packet sent by the first network device to the second network device includes the segment identifier list corresponding to the second forwarding path. As described above, the segment identifier list corresponding to the second forwarding path includes the segment identifier used to indicate that the second network device can provide the first forwarding path from the second network device to the network device in the first domain. After receiving the first packet, the second network device may forward the first packet in the first domain based on the first forwarding path and the segment identifier list that carries the segment identifier. Specifically, the second network device may forward the first packet in the first domain by using the following step 106.

Step 106: The second network device replaces the segment identifier in the segment identifier list with a segment identifier list corresponding to the first forwarding path, to generate a second packet, and forwards the second packet along the first forwarding path.

It may be understood that, in a process of forwarding a packet, a network device that receives the packet may forward the packet based on a segment identifier list that is carried in the packet and that indicates a forwarding path. However, the first packet received by the second network device does not carry a segment identifier list of a forwarding path in the first domain. Therefore, to forward the first packet in the first domain, before the second network device forwards the first packet, the segment identifier that is carried in the first packet and that is used to indicate that the second network device can provide the first forwarding path from the second network device to the network device in the first domain may be replaced with the segment identifier list of the first forwarding path, to generate the second packet. Then, the second packet that carries the segment identifier list of the first forwarding path is forwarded along the first forwarding path. In this way, after receiving the second packet that carries the segment identifier list of the first forwarding path, the network device in the first domain may forward the second packet in the first domain based on the segment identifier list of the first forwarding path. The segment identifier list of the first forwarding path is described by using an example with reference to FIG. 1. If the second network device is the network device 102 shown in FIG. 1, the segment identifier list of the first forwarding path may include, for example, a segment identifier corresponding to a link from the network device 102 to the network device 104 and a segment identifier list from the network device 104 to the network device 103.

It can be learned that, according to the solutions provided in this embodiment of this application, when a packet forwarded by the first network device that does not belong to the first domain passes through the network device in the first domain, the first network device can complete packet forwarding without interacting with a related controller.

In this embodiment of this application, after receiving the first packet, the second network device may determine, based on the segment identifier carried in the first packet, that the first packet needs to be forwarded in the first domain by using the first forwarding path. Specifically, the second network device may obtain the first forwarding path from the second network device to the network device in the first domain, and establish a mapping relationship between the first forwarding path and the segment identifier. In this embodiment of this application, the second network device may establish the mapping relationship between the first forwarding path and the segment identifier before sending the segment identifier to the first network device. Alternatively, after receiving the first packet carrying the segment identifier, the second network device may obtain the first forwarding path and establish the mapping relationship between the first forwarding path and the segment identifier. This is not specifically limited in this embodiment of this application. After establishing the mapping relationship between the first forwarding path and the segment identifier list, the second network device may determine, based on the mapping relationship, the first forwarding path corresponding to the segment identifier carried in the received first packet, so as to forward the first packet in the first domain based on the first forwarding path.

A specific implementation in which the second network device obtains the first forwarding path from the second network device to the network device in the first domain is not specifically limited in this embodiment of this application. In an example, the second network device may obtain, based on a topology structure of network devices in the first domain, the first forwarding path from the second network device to the network device in the first domain.

A specific implementation in which the second network device establishes the mapping relationship between the first forwarding path and the segment identifier is not specifically limited in this embodiment of this application. In an example, the second network device may generate the segment identifier list corresponding to the first forwarding path, and establish a mapping relationship between the segment identifier list of the first forwarding path and the segment identifier.

In another example, the second network device may determine an outbound interface corresponding to the first forwarding path, and establish a mapping relationship between the outbound interface corresponding to the first forwarding path and the segment identifier. Specifically, the outbound interface corresponding to the first forwarding path may be determined based on port numbers of ports connected between network devices on the first forwarding path. It should be noted that in this case, if the second network device is the foregoing POG, the outbound interface corresponding to the first forwarding path may be calculated by an optical domain controller, for example, the optical domain controller 250 shown in FIG. 2, and sent to the second network device. The outbound interface corresponding to the first forwarding path is described with reference to FIG. 2. The outbound interface corresponding to the first forwarding path may be, for example, an outbound interface corresponding to a first forwarding path P2->O2->O3->P3 on P2, and the outbound interface may correspond to a physical port, or may correspond to a virtual port.

During actual application, the first forwarding path from the second network device to the network device in the first domain may have corresponding network performance. In addition, when forwarding the first packet to the network device in the first domain, the first network device may also have a corresponding network performance requirement. In view of this, in an implementation of this embodiment of this application, in addition to indicating that the second network device can provide the first forwarding path from the second network device to the network device in the first domain, the segment identifier may be further used to indicate the network performance corresponding to the first forwarding path. In this way, when determining the second forwarding path, the first network device may determine the network performance requirement for forwarding the first packet, and determine a second forwarding path that can meet the network performance requirement based on the network performance requirement. Specifically, if the first network device determines that the network performance of the first forwarding path meets the network performance requirement for forwarding the first packet, when the first network device generates the second forwarding path, the first network device may determine that the second forwarding path may include the first forwarding path. In other words, the network performance of the first forwarding path can meet the network performance requirement for forwarding the first packet by the first network device. In this embodiment of this application, the network performance corresponding to the first forwarding path may be indicated by some content of the foregoing segment identifier. In an example, a function part in the segment identifier may indicate the network performance corresponding to the first forwarding path.

The network performance requirement for forwarding the first packet is not specifically limited in this embodiment of this application. In an example, the network performance requirement may be any one or a combination of a delay, bandwidth, load balancing, and path disjoint.

The network performance requirement is the delay, for example, may be a delay as low as possible during first packet forwarding, namely, a low delay. Further, when the network performance requirement is the delay, parameters corresponding to the network performance requirement may further include a specific performance parameter related to the delay, for example, may further include a preset time threshold. A transmission delay is less than the preset time threshold, and the preset time threshold may be, for example, 20 ms. Correspondingly, when the network performance corresponding to the first forwarding path is a delay, the segment identifier may also carry a corresponding preset time threshold.

The network performance requirement is the bandwidth, for example, exclusive bandwidth, where a bandwidth requirement of the exclusive bandwidth may be a preset bandwidth threshold. The preset bandwidth threshold may be, for example, 100M. Correspondingly, when the network performance corresponding to the first forwarding path is bandwidth, the segment identifier may also carry a corresponding preset bandwidth threshold.

The network performance requirement is the load balancing. For example, when there are a plurality of forwarding paths for forwarding the first packet, a forwarding path for forwarding the first packet may be determined with reference to load statuses of the forwarding paths.

The network performance requirement is the path disjoint. For example, the first packet is forwarded to the network device in the first domain by using at least two disjoint paths. The two disjoint paths mean that, except that a head-node network device and a tail-node network device are the same, other nodes of the two forwarding paths are different. For example, FIG. 2 is used as an example for description, where a path P1->P5->O2->O3->P4 and a path P1->P2->O1->O6->O5->O4->P3->P4 are two disjoint paths.

In this embodiment of this application, if the segment identifier may be further used to indicate the network performance corresponding to the first forwarding path, the first forwarding path obtained before the second network device establishes the mapping relationship between the first forwarding path and the segment identifier may be a first forwarding path that is from the second network device to the network device in the first domain and that has the network performance indicated by the segment identifier.

It may be understood that, during actual application, the second network device may provide a plurality of first forwarding paths from the second network device to the network device in the first domain, network performance corresponding to the plurality of first forwarding paths may be the same or different. In an implementation, the segment identifier may be used to indicate that the second network device can provide a plurality of first forwarding paths from the second network to the network device in the first domain, and network performance separately corresponding to the plurality of forwarding paths. The network performance requirement corresponding to the first packet forwarded by the first network device may be one or more of a plurality of pieces of network performance corresponding to the plurality of first forwarding paths that can be provided by the second network device. In view of this, in this embodiment of this application, to enable the second network device to determine, from the plurality of first forwarding paths, the first forwarding path that meets the network performance requirement of the first packet forwarded by the first network device, the first packet forwarded by the first network device to the second network device may further carry a network performance requirement of the second forwarding path. In this way, after receiving the first packet sent by the first network device, the second network device may obtain, based on the network performance requirement of the second forwarding path carried in the first packet and the network performance indicated in the segment identifier carried in the first packet, the first forwarding path that is from the second network device to the network device in the first domain and that has the network performance matching the network performance requirement of the second forwarding path, and forward the first packet in the first domain based on the first forwarding path that is from the second network device to the network device in the first domain and that has the network performance matching the network performance requirement of the second forwarding path. For example, the segment identifier can indicate that the second network device can provide two first forwarding paths to the network device in the first domain, where network performance of one first forwarding path is a relatively low delay, for example, a delay less than a preset time threshold, and network performance of the other first forwarding path is path disjoint. A network performance requirement of the second forwarding path carried in the first packet received by the second network device is a low delay. In this case, the second network device obtains the first forwarding path whose network performance is a relatively low delay, and forwards the first packet in the first domain based on the first forwarding path whose network performance is a relatively low delay.

As described above, the network performance requirement forwarded by the first network device to the second network device may be load balancing. In this case, the second network device may obtain all forwarding paths from the second network device to the network device in the first domain. If there are a plurality of the obtained forwarding paths, the second network device may select, based on load statuses of the plurality of forwarding paths, one forwarding path as the first forwarding path used to forward the first packet. For example, the second network device obtains three forwarding paths from the second network device to the network device in the first domain, where load of the first forwarding path is the largest, load of the second forwarding path is the smallest, and load of the third forwarding path is between the load of the first forwarding path and the load of the second forwarding path. In this case, the second network device may select the second forwarding path as the first forwarding path. In specific implementation, the second network device may adjust weights of the plurality of forwarding paths based on the load of the plurality of forwarding paths, to determine a first forwarding path from the plurality of forwarding paths based on the weights of the plurality of forwarding paths. It should be noted that, in addition to traffic from load balancing, the plurality of forwarding paths may also bear traffic from another performance requirement. It should be noted that if the load of the plurality of forwarding paths is heavy, the second network device may further re-establish a new first forwarding path.

In this embodiment of this application, the network performance requirement of the second forwarding path may be carried in a specific field of the first packet. The specific field is not specifically limited in this embodiment of this application. In an example, if the first packet forwarded by the first network device to the second network device is an SRv6 packet, the network performance requirement of the second forwarding path may be carried in a SID of the SRv6 packet, or the network performance requirement of the second forwarding path may be carried in a TLV field of a segment routing header (segment routing header, SRH) of the SRv6 packet.

It should be noted that a SID of an SRv6 packet generally includes locator + function fields, or may include locator + function + ARG, specifically depending on a specific type of the function. If the SID includes the locator + function + ARG, the ARG may also be considered as a part of the function. In this embodiment of this application, a SID of an SRv6 packet may be in a locator + function + ARG format. In this case, the network performance requirement of the second forwarding path may be carried in an ARG part of a function field of the SID of the SRv6 packet. It should be noted that content of the ARG part may be a single intent ID, namely, an IntentID. The IntentID indicates, for example, the foregoing low delay or high bandwidth. The ARG part may further include some specific performance parameters such as a delay lower than 20 ms and/or bandwidth higher than 100M.

It should be noted that both the first network device and the second network device in the network understand a meaning of the segment identifier. For example, the segment identifier represents a new SRv6 function, and the meaning of the segment identifier is that packet forwarding can be completed according to a specific performance requirement. Specifically, when the second network device advertises a SID corresponding to the SRv6 function by using a control plane, a parameter may not be specified. A specific format of the SRv6 function needs to be commonly understood on the network. For example, bits that represent a FUNC part are agreed on in advance according to a specified rule. In addition, an IntentID part of the SRv6 function also needs to be agreed on in advance on the network. For example, bits represent the IntentID part, and IntentID = 0010 represents a low delay. Alternatively, an alias may be created for the IntentID, for example, yellow is used to represent the low delay. This facilitates intuitive understanding of the network administrator. If the ARG part further includes some specific performance parameters in addition to the IntentID, formats and meanings of these parameters also need to be agreed on in advance on the network. For example, the network devices comply with a specific standard. Then, the first network device sends the packet to the second network device based on a SID list that includes this segment identifier. In this case, this segment identifier needs to include a specific parameter, for example, needs to include a specific IntentID, and optionally include some specific performance parameters. The second network device needs to determine, based on, for example, a pre-agreement, a performance requirement corresponding to the traffic.

It may be understood that a network topology structure of the network device in the first domain may change. Therefore, in this embodiment of this application, the second network device may monitor the network topology structure of the network device in the first domain in real time. However, as described above, the second network device may establish the mapping relationship between the first forwarding path and the segment identifier before sending the segment identifier to the first network device. Alternatively, after receiving the first packet carrying the segment identifier, the second network device may obtain the first forwarding path and establish the mapping relationship between the first forwarding path and the segment identifier. If the second network device establishes the mapping relationship between the first forwarding path and the segment identifier before sending the segment identifier to the first network device, the topology structure of the network device in the first domain changes within a time difference from a time point at which the first network device receives the segment identifier to a time point at which the first network device forwards the first packet carrying the segment identifier to the second network work, or after the first network device forwards the first packet to the second network device. In this way, the first forwarding path may no longer meet the network performance of the first forwarding path indicated by the segment identifier. In this case, the second network device may re-obtain a first forwarding path from the second network device to the network device in the first domain based on the network performance, and update the previously established mapping relationship between the first forwarding path and the segment identifier, that is, establish a mapping relationship between the segment identifier and the re-determined first forwarding path. In this way, when receiving the first packet carrying the segment identifier, the second network device may determine, based on the updated mapping relationship, the first forwarding path having the network performance, to forward the first packet in the first domain based on the first forwarding path.

An example is used for description with reference to FIG. 1, the second network device (namely, the network device 102) determines that the second network device can provide a first forwarding path from the second network device to the network device 103 in the first domain (namely, the second IGP domain 120), and network performance of the first forwarding path is that a delay is less than or equal to a preset time threshold. The first forwarding path is from the network device 102 to the network device 103, and it is established a mapping relationship between the first forwarding path and a segment identifier indicating that the first forwarding path has network performance that a delay is less than or equal to a preset time threshold. Then, the network device 102 monitors a delay status of the first forwarding path "from the network device 102 to the network device 103" in the second IGP domain 120 in real time, and finds that the first forwarding path "from the network device 102 to the network device 103" no longer meets the network performance that the delay is less than or equal to the preset time threshold. Therefore, the network device 102 re-obtains a first forwarding path having the network performance that the delay is less than or equal to the preset time threshold, and obtains that a first forwarding path "the network device 102->the network device 104->the network device 103" meets the network performance that the delay is less than or equal to the preset time threshold. In this case, the network device 102 updates the mapping relationship between the first forwarding path "from the network device 102 to the network device 103" and the segment identifier to a mapping relationship between the first forwarding path "the network device 102->the network device 104->the network device 103" and the segment identifier. After receiving the first packet that carries the segment identifier and that is sent by the first network device, for example, the network device 101, the network device 102 forwards the first packet in the second IGP domain based on the mapping relationship between the first forwarding path "the network device 102->the network device 104->the network device 103" and the segment identifier along the first forwarding path "the network device 102->the network device 104->the network device 103".

The foregoing describes the packet forwarding method provided in the embodiments of this application. With reference to the scenarios shown in FIG. 1 and FIG. 2, the following describes the packet forwarding method provided in the embodiments of this application.

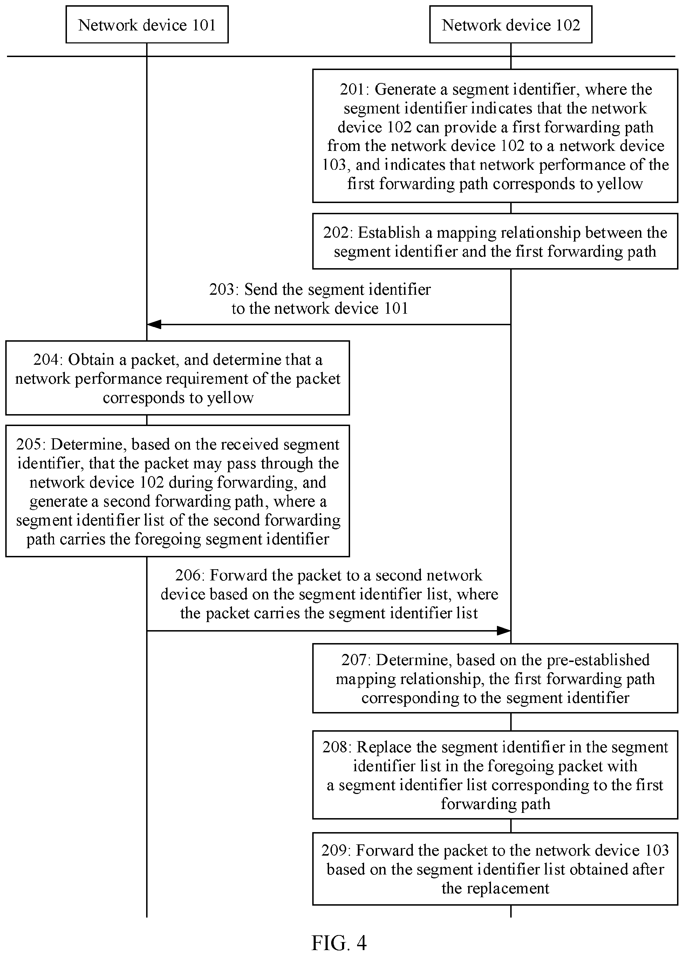

First, the packet forwarding method applied to the scenario shown in FIG. 1 is described with reference to FIG. 4.

FIG. 4 is a signaling interaction diagram of a packet forwarding method according to an embodiment of this application. The method shown in FIG. 4 may be implemented by using, for example, the following steps 201 to 209.

Step 201: The network device 102 generates a segment identifier, where the segment identifier indicates that the network device 102 can provide a first forwarding path from the network device 102 to the network device 103, and indicates that network performance of the first forwarding path corresponds to yellow.

In this embodiment of this application, yellow indicates that the network performance of the first forwarding path is a low delay.

Step 202: The network device 102 establishes a mapping relationship between the segment identifier and the first forwarding path.

In this embodiment of this application, the segment identifier may be, for example, A2:B567:0010:0000:0000, where A2 is a locator part of an SRv6 SID; A2 may represent, for example, an IPv6 prefix of 64 bits; B567 represents a function part of the SID; 0010 represents parameters corresponding to an IntentID part, that is, the parameters corresponding to the ARG part mentioned above; and the following two 0000 parts have no actual meaning herein. The segment identifier is written into a local SID table of the network device 102, for example, a prefix is A2:B567:0010::, and a processing action is mapping to be a SID list, for example, <A2::C5> in step 208. In addition, it should be noted that, in the following step 203, when the segment identifier is sent, only the FUNC part needs to be advertised (for example, the FUNC part is advertised as A2:B567::). When a network device uses this SRv6 function, the network device 101, for example, needs to fill in corresponding network performance (for example, A2:B567:0010:0000:0000) based on a pre-configuration. Optionally, the first 0000 may carry related delay requirement information. In addition, in another scenario in which the IntentID is used as a parameter, locations (last 32 bits) of the following two 0000 parts may be used to carry some other performance parameters.

Step 203: The network device 102 sends the segment identifier to the network device 101.

During advertising, optionally, an intentID list corresponding to the segment identifier may also be sent to the device 101 together. For example, the network device 102 deploys intentID = yellow, and establishes a mapping relationship between the segment identifier and an outbound interface corresponding to intentID = yellow, or establishes a mapping relationship between the segment identifier and a SID list of a forwarding path corresponding to intentID = yellow.

Step 204: The network device 101 obtains a packet, and determines that a network performance requirement of the packet corresponds to yellow.

It should be noted that, the network device 101 may be connected to, for example, user equipment related to a low-delay service. The network device 101 determines a service type based on an access port or a virtual port. Alternatively, an access control list (access control list, ACL) is deployed on the device 101, and in this case, a service type is determined based on, for example, a quintuple of the service. In this way, a network performance requirement for forwarding a packet is determined.

For specific implementation in which the network device 101 obtains the packet, refer to the related description part in the foregoing embodiment. Details are not described herein again.

Step 205: The network device 101 determines, based on the received segment identifier, that the packet may pass through the network device 102 during forwarding, and generates a second forwarding path, where a segment identifier list of the second forwarding path carries the foregoing segment identifier.

In this embodiment of this application, the segment identifier list of the second forwarding path may be, for example, <A1::C3, A2:BFUC:intentID, A3::D999>, where A1 is a prefix of the network device 101; C3 is an END.X FUNC corresponding to a link from the network device 101 to the network device 102, and the END.X FUNC is a standard FUNC of an SRv6 and corresponds to an L3 adjacent link; A2 is a prefix of the network device 102; BFUC is a function name, and the function is used to indicate that a function of selecting a path to the network device 102 based on a parameter can be provided, for example, a value of the BFUC may be B567; intentID is a parameter of the function, a value of the parameter may be used to indicate network performance, the parameter may be used to indicate the foregoing yellow, and when the parameter indicates the foregoing yellow, a value of intentID may be, for example, 0010 (based on a pre-agreement); A3 is a prefix of the network device 103; D999 is an END.DT4 FUNC (a standard SRv6 FUNC, meaning that after decapsulation, table lookup and packet forwarding are performed based on an VPN instance corresponding to the D999); and "::" indicates consecutive zeros.

Step 206: The network device 101 forwards the packet to a second network device 102 based on the segment identifier list, where the packet carries the segment identifier list.

Step 207: The network device 102 determines, based on the pre-established mapping relationship, the first forwarding path corresponding to the segment identifier.

In this embodiment of this application, the pre-established mapping relationship may be stored in the local SID table (English: local SID table) of the network device 102. As described above, specific content may be that the prefix is A2:B567:0010::, and the processing action is mapping to be a SID list, for example, <A2::C5> in step 208. It should be noted that even if a more detailed network performance requirement is further included when the network device 101 invokes the function, matching may still be performed based on the foregoing prefix, and a more detailed parameter is not presented on a forwarding plane. For example, a more detailed network performance requirement included herein is that a delay is less than 20 ms. In this case, a SID format is A2:B567:0010:0020:0000, where it is assumed that 0020 indicates that a delay requirement is 20 ms. During specific matching, matching is performed still based on A2:B567:0010::, and the requirement that the delay is 20 ms is sent to a CPU of the device 102 for parsing, to determine whether a current path can meet this requirement. If the current path cannot meet this requirement, calculation of a new mapped path may be triggered.

Step 208: The network device 102 replaces the segment identifier in the segment identifier list in the foregoing packet with a segment identifier list corresponding to the first forwarding path.

In an example, the network device 102 may replace the segment identifier A2:B567:0010:0000:0000 in the segment identifier list with a segment identifier list <A2::C5> of the first forwarding path, where the SID list includes only one SID, and this is an END.X FUNC corresponding to a link between the network device 102 and the network device 103.

Step 209: The network device 102 forwards the packet to the network device 103 based on the segment identifier list obtained after the replacement.

The network device 102 may forward the packet to the network device 103 based on a path indicated by A2::C5, and a relationship between A2::C5 and an outbound interface corresponding to a link is also stored in the local SID table (English: local SID table) of the network device 102.

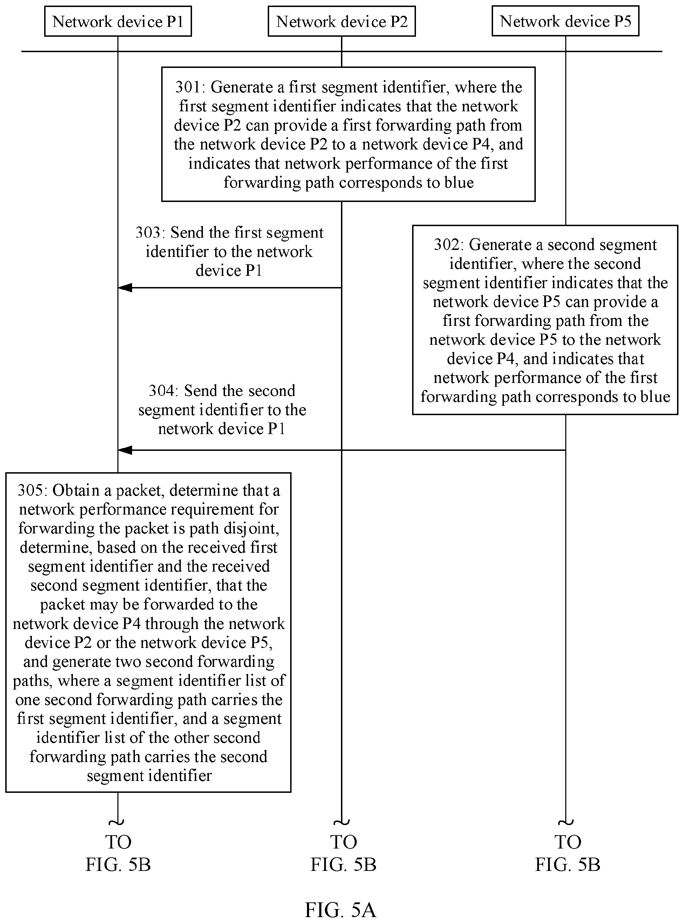

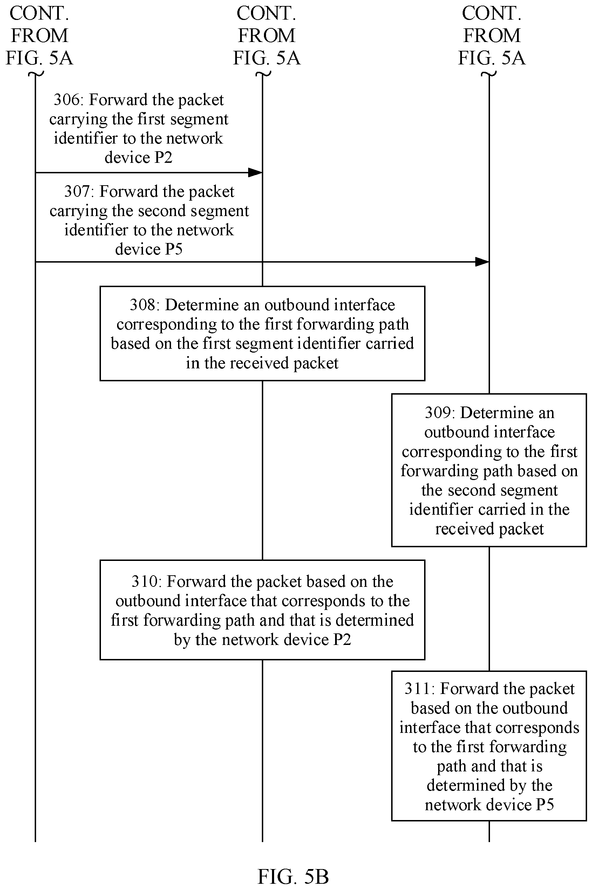

Then, the packet forwarding method applied to the scenario shown in FIG. 2 is described with reference to FIG. 5A and FIG. 5B.

FIG. 5A and FIG. 5B are a signaling interaction diagram of a packet forwarding method according to an embodiment of this application. The method shown in FIG. 5A and FIG. 5B may be implemented by using, for example, the following steps 301 to 311.

In the packet forwarding method shown in FIG. 5A and FIG. 5B, an example in which the network device P1 wants to forward a packet to the network device P4 is used for description. A network performance requirement for forwarding the packet by the network device P1 to the network device P4 is "path disjoint".

Step 301: The network device P2 generates a first segment identifier, where the first segment identifier indicates that the network device P2 can provide a first forwarding path from the network device P2 to the network device P4, and indicates that network performance of the first forwarding path corresponds to blue.

It should be noted that the first segment identifier may not indicate the network performance of the first forwarding path, but only indicate that the network device P2 can provide the first forwarding path from the network device P2 to the network device P4. Herein, an example in which the first segment identifier further indicates that the network performance of the first forwarding path corresponds to blue is used for description.

Step 302: The network device P5 generates a second segment identifier, where the second segment identifier indicates that the network device P5 can provide a first forwarding path from the network device P5 to the network device P4, and indicates that network performance of the first forwarding path corresponds to blue.

It should be noted that the second segment identifier may not indicate the network performance of the first forwarding path, but only indicate that the network device P5 can provide the first forwarding path from the network device P5 to the network device P4. Herein, an example in which the second segment identifier further indicates that the network performance of the first forwarding path corresponds to blue is used for description.

With respect to steps 301 and 302, it should be noted that it may be agreed on in advance on the network that the network device P2 and the network device P5 support blue, namely an IntentID. The network device P2 and the network device P5 do not trigger generation of related optical paths in advance, the network device P2 does not pre-establish a mapping relationship between the first segment identifier and the corresponding optical path, and the network device P5 does not pre-establish a mapping relationship between the second segment identifier and the corresponding optical path.

Step 303: The network device P2 sends the first segment identifier to the network device P1.

The first segment identifier sent by the network device P2 may be, for example, A2:00B1:0000:0000:0000, where A2 is a prefix of the network device P2; 00B1 represents a function part; and 0000:0000:0000 is an ARG part. When sending the first segment identifier to the network device P1, the network device P2 may not specify a value of the ARG part. It should be noted that, when sending the first segment identifier to the network device P1, the network device P2 needs to declare that the first segment identifier is a newly defined FUNC and carries a related FUNC type. For example, the FUNC type in the present invention may be an IntentBindingFUNC.

Step 304: The network device P5 sends the second segment identifier to the network device P1.

The segment identifier sent by the network device P5 may be, for example, A5:00B1:0000:0000:0000, where A5 is a prefix of the network device P5; 00B1 represents a function part; and 0000:0000:0000 is an ARG part. When sending the second segment identifier to the network device P1, the network device P5 may not specify a value of the ARG part. It should be noted that, when sending the second segment identifier to the network device P1, the network device P5 needs to declare that the second segment identifier is a newly defined FUNC and carries a related FUNC type. For example, the FUNC type in the present invention may be IntentBindingFUNC.

Step 305: The network device P1 obtains a packet, determines that a network performance requirement for forwarding the packet is path disjoint, determines, based on the received first segment identifier and the received second segment identifier, that the packet may be forwarded to the network device P4 through the network device P2 or the network device P5, and generates two second forwarding paths. A segment identifier list of one second forwarding path carries the first segment identifier, and a segment identifier list of the other second forwarding path carries the second segment identifier.

Specifically, the network device P1 needs to fill in a parameter of the function. For example, the first segment identifier that is invoked is A2:00B1:0040:0001:0000, where A2 is a prefix of the network device P2; 00B1 represents a function part; 0040 represents that network performance corresponds to blue; and 0001 represents associationGroupID = 1, and this ID is used to support calculation of orthogonal paths and cannot overlap with another associationGroupID on the network. Similarly, the second segment identifier that is invoked is A5:00B1:0040:0001:0000, where A5 is a prefix of the network device P5; 00B1 represents a function part, 0040 represents that network performance corresponds to blue; and 0001 represents associationGroupID = 1, and this ID is used to support calculation of orthogonal paths and cannot overlap with another associationGroupID on the network.

Step 306: The network device P1 forwards the packet carrying the first segment identifier to the network device P2.

The first segment identifier is carried in the segment identifier list of the second forwarding path. The segment identifier list of the second forwarding path may include three parts of segment identifiers, where the first part of segment identifier is a segment identifier corresponding to a path from the network device P1 to the network device P2, the second part of segment identifier is the first segment identifier, and the third part of segment identifier is a segment identifier from the network device P3 to the network device P4.

Step 307: The network device P1 forwards the packet carrying the second segment identifier to the network device P5.

The second segment identifier is carried in the segment identifier list of the second forwarding path. The segment identifier list of the second forwarding path may include two parts of segment identifiers, where the first part of segment identifier is a segment identifier corresponding to a path from the network device P1 to the network device P5, and the second part of segment identifier is the second segment identifier.

Step 308: The network device P2 determines an outbound interface corresponding to the first forwarding path based on the first segment identifier carried in the received packet.

Step 309: The network device P5 determines an outbound interface corresponding to the first forwarding path based on the second segment identifier carried in the received packet.

With respect to step 308 and step 309, it should be noted that the outbound interface determined by the network device P2 may be a logical outbound interface or a physical outbound interface. Specifically, if the network device P2 and the network device O1 are a same physical device, the outbound interface determined by the network device P2 may be a logical outbound interface. If the network device P2 and the network device O1 are two physical devices, the outbound interface determined by the network device P2 is a physical outbound interface or a logical outbound interface.

In this embodiment of this application, the network device P2 may report a path request to the optical domain controller, and the optical domain controller searches for an available path that meets the request for use by the network device P2, or creates an optical path for use by the network device P2. For example, in this case, it is assumed that a path of an optical network fed back by a controller of the optical network is {O1, O6, O5, O4}, and the specific path is P2->O1->O6->O5->O4->P3, where P2 and P3 may be considered as nodes in an IP domain and are associated with the IntentBindingFUNC that is advertised by P2 and that is mentioned in step 303.

In this embodiment of this application, the network device P5 may report a path request to the optical domain controller, and the optical domain controller searches for an available path that meets the request for use by the network device P5, or creates an optical path for use by the network device P5. For example, in this case, it is assumed that a path of an optical network fed back by a controller of the optical network is {O2, O3}, and the specific path is P5->O2->O3->P4, where P5 and P4 may be considered as nodes in an IP domain and are associated with the foregoing IntentBindingFUNC that is advertised by the P5.

It may be understood that the optical domain controller receives path requests from the network device P2 and the network device P5, observes a same associationGroupID. Therefore, the optical domain controller searches for two disjoint optical paths from the network device P2 to the network device P3 and from the network device P5 to the network device P4, and separately feeds back the paths to the network device P2 and the network device P5, for example, the fed-back paths are separately {O1, O6, O5, O4} and {O2, O3}.

The network device P2 receives the first forwarding path {O1, O6, O5, O4} sent by the optical domain controller, and establishes a mapping relationship between the first segment identifier and an outbound interface corresponding to the received first forwarding path.

The network device P5 receives the first forwarding path {O2, O3} sent by the optical domain controller, and establishes a mapping relationship between the second segment identifier and an outbound interface corresponding to the first forwarding path.

Step 310: The network device P2 forwards the packet based on the outbound interface that corresponds to the first forwarding path and that is determined by the network device P2.

The network device P2 determines the outbound interface corresponding to the first forwarding path based on the mapping relationship between the first segment identifier and the outbound interface corresponding to the first forwarding path {O1, O6, O5, O4}. For example, the first segment identifier received by the network device P2 is A2:00B1:0040:0001:0000, and is mapped to the outbound interface corresponding to the first forwarding path {O1, O6, O5, O4} based on the prefix of A2:00B1:0040:0001:: in the local SID table. Step 311: The network device P5 forwards the packet based on the outbound interface that corresponds to the first forwarding path and that is determined by the network device P5.

The network device P5 determines the outbound interface corresponding to the first forwarding path based on the mapping relationship between the second segment identifier and the outbound interface corresponding to the first forwarding path {O2, O3}. For example, the second segment identifier received by the network device P5 is A5:00B1:0040:0001:0000, and is mapped to the outbound interface corresponding to the first forwarding path {O2, O3} based on the prefix of A5:00B1:0040:0001:: in the local SID table.

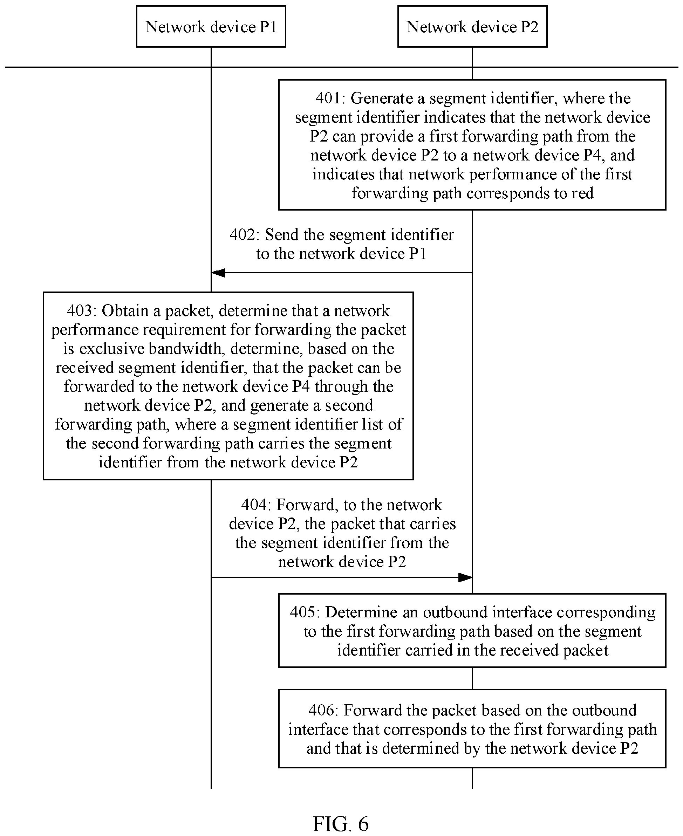

Then, the packet forwarding method applied to the scenario shown in FIG. 2 is described with reference to FIG. 6.

FIG. 6 is a signaling interaction diagram of a packet forwarding method according to an embodiment of this application. The method shown in FIG. 6 may be implemented by using, for example, the following steps 401 to 406.

In the packet forwarding method shown in FIG. 6, an example in which the network device P1 wants to forward a packet to the network device P4 is used for description. A network performance requirement for forwarding the packet by the network device P1 to the network device P4 is "exclusive bandwidth".

Step 401: The network device P2 generates a segment identifier, where the segment identifier indicates that the network device P2 can provide a first forwarding path from the network device P2 to the network device P4, and indicates that network performance of the first forwarding path corresponds to red.

It should be noted that the segment identifier generated by the network device P2 may alternatively indicate only that the network device P2 can provide the first forwarding path from the network device P2 to the network device P4, but does not indicate that the network performance of the first forwarding path corresponds to red. Herein, an example in which the segment identifier further indicates that the network performance of the first forwarding path corresponds to red is used for description.

It should be noted that in this embodiment of this application, that the network performance of the first forwarding path corresponds to red indicates that the network performance supported by the first forwarding path is exclusive bandwidth. Specifically, a SID advertised by a network device may be A2:00B1::, and that the SRv6 FUNC supports various colors/IntentIDs is agreed on in advance on the network.

In this embodiment of this application, it is agreed on in advance that a SID such as A2:00B1:: advertised by the network device P2 supports the red parameter. Further, it needs to be agreed on that some specific performance parameters may be included if the parameter is red. For example, a sub-parameter pathID is also included. The pathID does not appear in the SID during advertising, but may appear in a Sub-TLV corresponding to the SRv6 FUNC. For example, a pathID that is deployed by the device P2 and a user of a corresponding pathID are indicated. The information is advertised for two purposes: one purpose is to enable a headend node to select an unoccupied pathID when necessary, and the other purpose is to enable the headend node to confirm that an application of the headend node succeeds, that is, the headend node discovers, in subsequent update messages, that a pathID applied for by the headend node and an identifier of the headend node are advertised by the network device P2.

It should be noted that the foregoing plurality of forwarding paths that can be provided by the network device P2 and that support exclusive bandwidth may be pre-constructed by the optical domain controller and sent to the network device P2 by the optical domain controller.

Step 402: The network device P2 sends the segment identifier to the network device P1.

In this embodiment of this application, the segment identifier sent by the network device P2 to the network device P1 may be, for example, A2:00B1::.

Step 403: The network device P1 obtains a packet, determines that a network performance requirement for forwarding the packet is exclusive bandwidth, determines, based on the received segment identifier, that the packet can be forwarded to the network device P4 through the network device P2, and generates a second forwarding path. A segment identifier list of the second forwarding path carries the segment identifier from the network device P2.

It should be noted that the network performance requirement determined by the network device P1 for forwarding the packet is exclusive bandwidth, and a bandwidth requirement of the exclusive bandwidth may be, for example, 400M.

The network device P1 determines that the network performance requirement for forwarding the packet is exclusive bandwidth, and the segment identifier sent by the network device P2 indicates that the network device P2 may further provide the first forwarding path that supports the exclusive bandwidth, for example, the foregoing unoccupied pathIDs. Forwarding paths corresponding to these pathIDs may be provided for the network device P1 to forward the packet. Therefore, the network device P1 determines that the packet may be forwarded to the network device P4 through the network device P2, and generates a second forwarding path.

Step 404: The network device P1 forwards, to the network device P2, the packet that carries the segment identifier from the network device P2.

In this embodiment of this application, the segment identifier that is from the network device P2 and that is carried in the packet in step 404 may be A2:00B1:0030:0011:0400, where 0030 represents that an IntentID/color is red; 0011 represents that a pathID is 11; and 0400 represents that required bandwidth is 400M.

Step 405: The network device P2 determines an outbound interface corresponding to the first forwarding path based on the segment identifier carried in the received packet.

It should be noted that the network device P2 first checks whether there is an available path that can provide the required exclusive bandwidth of 400M. If there is an available path, the network device P2 may directly use the path. If no, the network device P2 triggers creation of a required path, and then reports to an optical PCE, or after the network device P2 requests an optical PCE to create a required path, related path information is obtained.

It is assumed that a path that is triggered to be created is Om' {O1, O2, O3, O4}. Herein, it is assumed that Om' and Om paths overlap, but use independent optical network resources. In this case, the network device P2 further creates a forwarding entry of the local SID table, that is, a prefix is A2:00B1:0030:0011::, and a processing action is forwarding to an outbound interface corresponding to the optical path Om' {O1, O2, O3, O4}.

It should be noted that the network device P2 needs to monitor the parameter 0400 herein. If the parameter changes, for example, a service requirement of P1 changes to 500M, the sent packet changes to A2:00B1:0030:0011:0500. In this case, if the existing Om' {O1, O2, O3, O4} cannot meet the requirement, the network device P2 may use or create a new optical path, and modify related mapping.

It should be noted that, after completing the forwarding entry, the network device P2 updates the segment identifier sent by the network device P2 in step 402. In this case, the used pathID includes 0011, and a user is the network device P1. After receiving this update, the network device P1 may determine that a path application of the network device P1 succeeds.

Step 406: The network device P2 forwards the packet based on the outbound interface that corresponds to the first forwarding path and that is determined by the network device P2.

It should be noted that, in the foregoing step, the pathID is a globally allocated value. When the network device P1 sends the packet that includes the segment identifier in step 403, it cannot be confirmed that the network device P2 can complete the forwarding. A problem that the network device P2 may encounter includes: path creation fails, or the pathID 0011 is already occupied, which occurs in a scenario in which another headend node also requests for a same value. In one aspect, the problem may be resolved by statically planning that different headend nodes use different pathID ranges. In another aspect, the problem may be resolved by the network device P2 to advertise occupied PathID information.

It should be noted that implementations in which the network performance requirements for forwarding the packet by the network device P1 to the network device P4 are "delay", "load balancing", and the like are similar, that is, after the network device P1 receives the segment identifier sent by a POG (for example, any one or more of the network device P2, the network device P5, and the network device P3), the packet carrying the segment identifier list of the segment identifier is forwarded to the POG, and the POG determines an outbound interface of the first forwarding path based on the segment identifier, to implement packet forwarding. For related content, refer to the description parts of the foregoing embodiments, and details are not described herein again.

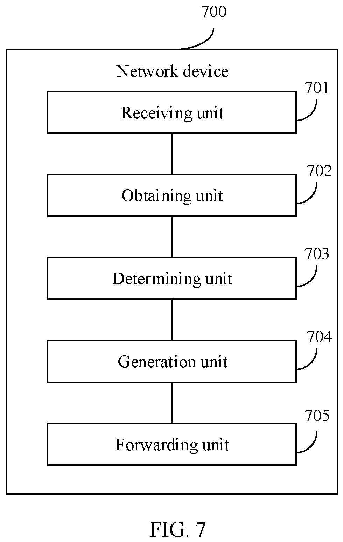

Based on the packet forwarding method provided in the foregoing embodiments, an embodiment of this application provides a network device. FIG. 7 is a schematic diagram of a structure of a network device according to an embodiment of this application.

The network device 700 provided in this embodiment of this application may include, for example, a receiving unit 701, an obtaining unit 702, a determining unit 703, a generation unit 704, and a forwarding unit 705.

The receiving unit 701 is configured to receive a segment identifier sent by a second network device, where the segment identifier indicates that the second network device can provide a first forwarding path from the second network device to a network device in a first domain; and the network device does not belong to the first domain.

The obtaining unit 702 is configured to obtain a packet.

The determining unit 703 is configured to determine a second forwarding path for forwarding the packet, where the second forwarding path passes through the first domain.

The generation unit 704 is configured to generate a segment identifier list corresponding to the second forwarding path, where the segment identifier list includes the segment identifier.

The forwarding unit 705 is configured to forward the packet to the second network device based on the segment identifier list.

In a possible implementation, the segment identifier is further used to indicate network performance corresponding to the first forwarding path that can be provided by the second network device.

The determining unit 703 is specifically configured to:
determine a network performance requirement for forwarding the packet, and determine the second forwarding path based on the network performance requirement, where the network performance corresponding to the first forwarding path meets the network performance requirement.

In a possible implementation, the network performance requirement includes at least one of the following:
a delay, bandwidth, load balancing, and path disjoint.

In a possible implementation, the segment identifier is a binding segment identifier.

In a possible implementation, the receiving unit 701 is specifically configured to:
receive a link state packet message sent by the second network device, where the link state packet message carries the segment identifier.

In a possible implementation, the segment identifier is carried in an extended Internet protocol IP reachability field of the link state packet message.

In a possible implementation, the first forwarding path is an optical path or a forwarding path in a segment routing network.

In a possible implementation, the network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

It should be noted that the network device 700 shown in FIG. 7 may be the first network device mentioned in the foregoing embodiments. The packet obtained by the obtaining unit 702 may be the first packet mentioned in the foregoing embodiments. The network device 700 shown in FIG. 7 may perform steps performed by the first network device in the foregoing embodiments, for example, steps 103 to 105.

Because the network device 700 corresponds to the first network device provided in the foregoing method embodiments, specific implementation of each unit in the network device 700 is a same concept as that in the foregoing method embodiments. Therefore, for the specific implementation of each unit in the network device 700, refer to the description parts of the first network device in the foregoing method embodiments. Details are not described herein again.

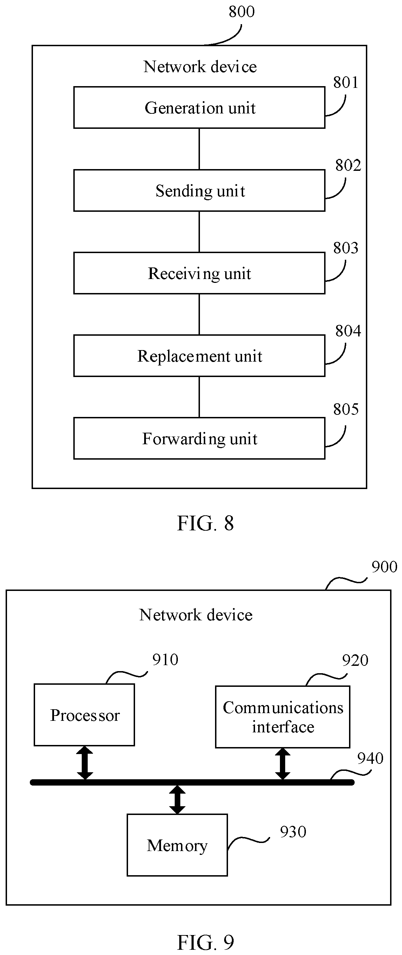

FIG. 8 is a schematic diagram of a structure of another network device according to an embodiment of this application.

The network device 800 provided in this embodiment of this application may include, for example, a generation unit 801, a sending unit 802, a receiving unit 803, a replacement unit 804, and a forwarding unit 805.

The generation unit 801 is configured to generate a segment identifier, where the segment identifier indicates that the network device can provide a first forwarding path from the network device to a network device in a first domain.

The sending unit 802 is configured to send the segment identifier to a first network device, where the first network device does not belong to the first domain.

The receiving unit 803 is configured to receive a first packet sent by the first network device, where a segment identifier list of the first packet includes the segment identifier.

The replacement unit 804 is configured to replace the segment identifier in the segment identifier list with a segment identifier list corresponding to the first forwarding path, to generate a second packet.

The forwarding unit 805 is configured to forward the second packet along the first forwarding path.

In a possible implementation, the sending unit 802 is specifically configured to:
send a link state packet message to the first network device, where the link state packet message carries the segment identifier.

In a possible implementation, the segment identifier is carried in an extended Internet protocol IP reachability field of the link state packet message.

In a possible implementation, the network device 800 further includes:
a first obtaining unit, configured to obtain the first forwarding path from the network device to the network device in the first domain; and
an establishment unit, configured to establish a mapping relationship between the first forwarding path and the segment identifier.

In a possible implementation, the establishment unit is specifically configured to:
generate the segment identifier list corresponding to the first forwarding path, where the mapping relationship is a mapping relationship between the segment identifier list corresponding to the first forwarding path and the segment identifier.

In a possible implementation, the establishment unit is specifically configured to:
determine an outbound interface corresponding to the first forwarding path, and establish a mapping relationship between the outbound interface corresponding to the first forwarding path and the segment identifier.

In a possible implementation, the segment identifier is further used to indicate network performance corresponding to the first forwarding path that is from the network device to the network device in the first domain and that can be provided by the network device.

The first obtaining unit is specifically configured to:
obtain the first forwarding path that has the network performance and that is from the network device to the network device in the first domain.

In a possible implementation, a network performance requirement includes at least one of the following:
a delay, bandwidth, load balancing, and path disjoint.

In a possible implementation, the network device 800 further includes:
a second obtaining unit, configured to: when the network device determines that the first forwarding path to the network device in the first domain does not have the network performance, re-obtain, based on the network performance, a first forwarding path to the network device in the first domain; and
an updating unit, configured to update the mapping relationship based on the re-obtained first forwarding path to the network device in the first domain.

In a possible implementation, the first packet includes a network performance requirement of a second forwarding path, the second forwarding path is a forwarding path that is determined by the first network device and that is used to forward the first packet, and the first obtaining unit is specifically configured to:
obtain the first forwarding path that is from the network device to the network device in the first domain and that has the network performance matching the network performance requirement of the second forwarding path.

In a possible implementation, the first packet is an SRv6 packet, and the network performance requirement of the second forwarding path is carried in a segment identifier SID of a segment routing header SRH or in a type-length-value TLV field of a segment routing header SRH of the SRv6 packet.

In a possible implementation, if the network performance is load balancing, and the network device obtains a plurality of forwarding paths to the network device in the first domain,
the network device 800 further includes:
a selection unit, configured to select one of the plurality of forwarding paths as the first forwarding path based on load of each of the plurality of forwarding paths.

In a possible implementation, the segment identifier is a binding segment identifier.

In a possible implementation, the forwarding path from the network device to the network device in the first domain is an optical path or a forwarding path in a segment routing network.

In a possible implementation, the first network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

It should be noted that the network device 800 shown in FIG. 8 may be the second network device mentioned in the foregoing embodiments. The network device 800 shown in FIG. 8 may perform the steps performed by the second network device in the foregoing embodiments, for example, steps 101, 102, and 106.

Because the network device 800 corresponds to the second network device provided in the foregoing method embodiments, specific implementation of each unit in the network device 800 is a same concept as that in the foregoing method embodiments. Therefore, for the specific implementation of each unit in the network device 800, refer to the description parts of the second network device in the foregoing method embodiments. Details are not described herein again.

An embodiment of this application further provides a network device. The network device corresponds to the network device 700 shown in FIG. 7, and the network device includes a processor and a memory.

The memory is configured to store instructions.

The processor is configured to execute the instructions in the memory, to perform the method steps performed by the first network device provided in the foregoing embodiments.

An embodiment of this application further provides a network device. The network device corresponds to the network device 800 shown in FIG. 8, and the network device includes a processor and a memory.

The memory is configured to store instructions.

The processor is configured to execute the instructions in the memory, to perform the method steps performed by the second network device provided in the foregoing embodiments.

It should be noted that in the embodiments of this application, both the network device 700 performing the method steps performed by the first network device provided in the foregoing embodiments and the network device 800 performing the method steps performed by the second network device provided in the foregoing embodiments may use a hardware structure shown in FIG. 9. FIG. 9 is a schematic diagram of a structure of a network device according to an embodiment of this application. As shown in FIG. 9, a communications device 900 includes a processor 910, a communications interface 920, and a memory 930. There may be one or more processors 910 in the communications device 900, and FIG. 9 shows one processor as an example. In this embodiment of this application, the processor 910, the communications interface 920, and the memory 930 may be connected by using a bus system or in another manner, and are connected through a bus system 940 as an example in FIG. 9.

The processor 910 may be a central processing unit (central processing unit, CPU), a network processor (network processor, NP), or a combination of the CPU and the NP. The processor 910 may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable logic gate array (field-programmable gate array, FPGA), a generic array logic (generic array logic, GAL), or any combination thereof.

The memory 930 may include a volatile memory (English: volatile memory), for example, a random access memory (random access memory, RAM). The memory 930 may alternatively include a non-volatile memory (English: non-volatile memory), for example, a flash memory (English: flash memory), a hard disk drive (hard disk drive, HDD), or a solid-state drive (solid-state drive, SSD). The memory 930 may further include a combination of the foregoing types of memories.

When the network device 900 in FIG. 9 corresponds to the first network device mentioned in the foregoing embodiments, the memory 930 may be configured to store information such as the obtained first packet. When the network device 900 in FIG. 9 corresponds to the second network device mentioned in the foregoing embodiments, the memory 930 may be configured to store a mapping relationship between the first forwarding path and a segment identifier used to indicate that the second network device can provide the first forwarding path from the second network device to the network device in the first domain.

Optionally, the memory 930 stores an operating system and a program, an executable module, or a data structure, or a subset thereof, or an extended set thereof. The program may include various operation instructions used to implement various operations. The operating system may include various system programs, to implement various basic services and process hardware-based tasks. The processor 910 may read the program in the memory 930, to implement the communications method provided in the embodiments of this application.

The bus system 940 may be a peripheral component interconnect (peripheral component interconnect, PCI) bus, an extended industry standard architecture (extended industry standard architecture, EISA) bus, or the like. The bus system 940 may be classified into an address bus, a data bus, a control bus, and the like. For ease of indication, the bus is indicated by using only one bold line in FIG. 9. However, it does not indicate that there is only one bus or only one type of bus.

An embodiment of this application further provides a computer-readable storage medium, including instructions. When the instructions are run on a computer, the computer is enabled to perform the method steps performed by the first network device provided in the foregoing embodiments. The first network device may correspond to, for example, the network device 700 shown in FIG. 7.

An embodiment of this application further provides a computer-readable storage medium, including instructions. When the instructions are run on a computer, the computer is enabled to perform the method steps performed by the second network device provided in the foregoing embodiments. The second network device may correspond to, for example, the network device 800 shown in FIG. 8.

An embodiment of this application further provides a computer program product including instructions. When the computer program product is run on a computer, the computer is enabled to perform the method steps performed by the first network device provided in the foregoing embodiments. The first network device may correspond to, for example, the network device 700 shown in FIG. 7.

An embodiment of this application further provides a computer program product including instructions. When the computer program product is run on a computer, the computer is enabled to perform the method steps performed by the second network device provided in the foregoing embodiments. The second network device may correspond to, for example, the network device 800 shown in FIG. 8.

In this application, "at least one" means one or more, and "a plurality of' means two or more. The term "at least one of the following items (pieces)" or an expression similar to the term indicates any combination of the items, and includes a single item (piece) or any combination of a plurality of items (pieces). For example, at least one of a, b, or c may indicate: a, b, c, a and b, a and c, b and c, or a, b, and c, where a, b, and c may be singular or plural.

In the specification, claims, and accompanying drawings of this application, the terms "first", "second", "third", "fourth", and the like (if existent) are intended to distinguish between similar objects but do not necessarily indicate a specific order or sequence. It should be understood that data used in such a way are interchangeable in proper cases, so that the embodiments described herein can be implemented in an order other than orders illustrated or described herein. In addition, terms "include" and "have" and any variants thereof are intended to cover the non-exclusive inclusion. For example, a process, method, system, product, or device that includes a list of steps or units is not necessarily limited to those expressly listed steps or units, but may include other steps or units not expressly listed or inherent to such a process, method, product, or device.

It may be clearly understood by persons skilled in the art that, for the purpose of convenient and brief description, for a detailed working process of the foregoing system, apparatus, and unit, refer to a corresponding process in the method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical service division. There may be another division manner in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on an actual requirement to achieve the objectives of the solutions of the embodiments.

In addition, service units in the embodiments of this application may be integrated into one processing unit, or each of the units may exist alone physically, or two or more units are integrated into one unit. The integrated unit may be implemented in a form of hardware, or may be implemented in a form of a software service unit.

When the integrated unit is implemented in the form of a software service unit and sold or used as an independent product, the integrated unit may be stored in a computer-readable storage medium. Based on such an understanding, the technical solutions of this application essentially, or the part contributing to the current technology, or all or some of the technical solutions may be implemented in a form of a software product. The computer software product is stored in a storage medium and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

Persons skilled in the art should be aware that in the foregoing one or more examples, services described in the present invention may be implemented by hardware, software, firmware, or any combination thereof. When being implemented by hardware, the foregoing services may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

In the foregoing specific implementations, the objectives, technical solutions, and benefits of the present invention are further described in detail. It should be understood that the foregoing descriptions are merely specific implementations of the present invention.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A packet forwarding method, comprising:
receiving, by a first network device, a segment identifier sent by a second network device, wherein the segment identifier indicates that the second network device can provide a first forwarding path from the second network device to a network device in a first domain, and the first network device does not belong to the first domain;
obtaining, by the first network device, a packet, and determining a second forwarding path for forwarding the packet, wherein the second forwarding path passes through the first domain;
generating, by the first network device, a segment identifier list corresponding to the second forwarding path, wherein the segment identifier list comprises the segment identifier; and
forwarding, by the first network device, the packet to the second network device based on the segment identifier list.

2. The method according to claim 1, wherein the segment identifier is further used to indicate network performance corresponding to the first forwarding path that can be provided by the second network device; and
the determining, by the first network device, a second forwarding path comprises:
determining, by the first network device, a network performance requirement for forwarding the packet, and determining the second forwarding path based on the network performance requirement, wherein the network performance corresponding to the first forwarding path meets the network performance requirement.

3. The method according to claim 2, wherein the network performance requirement comprises at least one of the following:
a delay, bandwidth, load balancing, and path disjoint.

4. The method according to any one of claims 1 to 3, wherein the segment identifier is a binding segment identifier.

5. The method according to any one of claims 1 to 4, wherein the receiving, by a first network device, a segment identifier sent by a second network device comprises:
receiving, by the first network device, a link state packet message sent by the second network device, wherein the link state packet message carries the segment identifier.

6. The method according to claim 5, wherein the segment identifier is carried in an extended Internet protocol IP reachability field of the link state packet message.

7. The method according to any one of claims 1 to 6, wherein the first forwarding path is an optical path or a forwarding path in a segment routing network.

8. The method according to any one of claims 1 to 6, wherein the first network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

9. A packet processing method, wherein the method comprises:
generating, by a second network device, a segment identifier, wherein the segment identifier indicates that the second network device can provide a first forwarding path from the second network device to a network device in a first domain;
sending, by the second network device, the segment identifier to a first network device, wherein the first network device does not belong to the first domain;
receiving, by the second network device, a first packet sent by the first network device, wherein a segment identifier list of the first packet comprises the segment identifier;
replacing, by the second network device, the segment identifier in the segment identifier list with a segment identifier list corresponding to the first forwarding path, to generate a second packet; and
forwarding, by the second network device, the second packet along the first forwarding path.

10. The method according to claim 9, wherein the sending, by the second network device, the segment identifier to a first network device comprises:
sending, by the second network device, a link state packet message to the first network device, wherein the link state packet message carries the segment identifier.

11. The method according to either of claims 9 and 10, wherein the method further comprises:
obtaining, by the second network device, the first forwarding path from the second network device to the network device in the first domain; and
establishing, by the second network device, a mapping relationship between the first forwarding path and the segment identifier.

12. The method according to claim 11, wherein the establishing, by the second network device, a mapping relationship between the first forwarding path and the segment identifier comprises:
generating, by the second network device, the segment identifier list corresponding to the first forwarding path, wherein the mapping relationship is a mapping relationship between the segment identifier list corresponding to the first forwarding path and the segment identifier.

13. The method according to claim 11, wherein the establishing, by the second network device, a mapping relationship between the first forwarding path and the segment identifier comprises:
determining, by the second network device, an outbound interface corresponding to the first forwarding path, and establishing a mapping relationship between the outbound interface corresponding to the first forwarding path and the segment identifier.

14. The method according to any one of claims 11 to 13, wherein the segment identifier is further used to indicate network performance corresponding to the first forwarding path that is from the second network device to the network device in the first domain and that can be provided by the second network device; and
the obtaining, by the second network device, the first forwarding path from the second network device to the network device in the first domain comprises:
obtaining, by the second network device, the first forwarding path that has the network performance and that is from the second network device to the network device in the first domain.

15. The method according to claim 14, wherein the method further comprises:
when the second network device determines that the first forwarding path to the network device in the first domain does not have the network performance, re-obtaining, by the second network device based on the network performance, a first forwarding path to the network device in the first domain; and
updating, by the second network device, the mapping relationship based on the re-obtained first forwarding path to the network device in the first domain.

16. The method according to claim 14, wherein the first packet comprises a network performance requirement of a second forwarding path, the second forwarding path is a forwarding path that is determined by the first network device and that is used to forward the first packet, and the obtaining, by the second network device, the first forwarding path that has the network performance and that is from the second network device to the network device in the first domain comprises:
obtaining, by the second network device, the first forwarding path that is from the second network device to the network device in the first domain and that has the network performance matching the network performance requirement of the second forwarding path.

17. The method according to claim 14, wherein if the network performance is load balancing, and the second network device obtains a plurality of forwarding paths to the network device in the first domain,
the method further comprises:
selecting, by the second network device, one of the plurality of forwarding paths as the first forwarding path based on load of each of the plurality of forwarding paths.

18. The method according to any one of claims 9 to 17, wherein the forwarding path from the second network device to the network device in the first domain is an optical path or a forwarding path in a segment routing network.

19. The method according to any one of claims 9 to 17, wherein the first network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

20. A network device, wherein the network device comprises:
a receiving unit, configured to receive a segment identifier sent by a second network device, wherein the segment identifier indicates that the second network device can provide a first forwarding path from the second network device to a network device in a first domain, and the network device does not belong to the first domain;
an obtaining unit, configured to obtain a packet;
a determining unit, configured to determine a second forwarding path for forwarding the packet, wherein the second forwarding path passes through the first domain;
a generation unit, configured to generate a segment identifier list corresponding to the second forwarding path, wherein the segment identifier list comprises the segment identifier; and
a forwarding unit, configured to forward the packet to the second network device based on the segment identifier list.

21. The network device according to claim 20, wherein the segment identifier is further used to indicate network performance corresponding to the first forwarding path that can be provided by the second network device; and
the determining unit is specifically configured to:
determine a network performance requirement for forwarding the packet, and determine the second forwarding path based on the network performance requirement, wherein the network performance corresponding to the first forwarding path meets the network performance requirement.

22. The network device according to claim 21, wherein the network performance requirement comprises at least one of the following:
a delay, bandwidth, load balancing, and path disjoint.

23. The network device according to any one of claims 20 to 22, wherein the segment identifier is a binding segment identifier.

24. The network device according to any one of claims 20 to 23, wherein the receiving unit is specifically configured to:
receive a link state packet message sent by the second network device, wherein the link state packet message carries the segment identifier.

25. The network device according to any one of claims 20 to 24, wherein the first forwarding path is an optical path or a forwarding path in a segment routing network.

26. The network device according to any one of claims 20 to 24, wherein the network device belongs to a second domain; and both the first domain and the second domain are interior gateway protocol IGP domains; or both the first domain and the second domain are autonomous system AS domains; or the first domain is an optical domain, and the second domain is an Internet protocol IP domain.

27. A network device, wherein the network device comprises:
a generation unit, configured to generate a segment identifier, wherein the segment identifier indicates that the network device can provide a first forwarding path from the network device to a network device in a first domain;
a sending unit, configured to send the segment identifier to a first network device, wherein the first network device does not belong to the first domain;
a receiving unit, configured to receive a first packet sent by the first network device, wherein a segment identifier list of the first packet comprises the segment identifier;
a replacement unit, configured to replace the segment identifier in the segment identifier list with a segment identifier list corresponding to the first forwarding path, to generate a second packet; and
a forwarding unit, configured to forward the second packet along the first forwarding path.

28. The network device according to claim 27, wherein the sending unit is specifically configured to:
send a link state packet message to the first network device, wherein the link state packet message carries the segment identifier.

29. The network device according to claim 28, wherein the segment identifier is carried in an extended Internet protocol IP reachability field of the link state packet message.

30. The network device according to any one of claims 27 to 29, wherein the network device further comprises:
a first obtaining unit, configured to obtain the first forwarding path from the network device to the network device in the first domain; and
an establishment unit, configured to establish a mapping relationship between the first forwarding path and the segment identifier.

31. The network device according to claim 30, wherein the establishment unit is specifically configured to:
generate the segment identifier list corresponding to the first forwarding path, wherein the mapping relationship is a mapping relationship between the segment identifier list corresponding to the first forwarding path and the segment identifier.

32. The network device according to claim 30, wherein the establishment unit is specifically configured to:
determine an outbound interface corresponding to the first forwarding path, and establish a mapping relationship between the outbound interface corresponding to the first forwarding path and the segment identifier.

33. The network device according to any one of claims 30 to 32, wherein the segment identifier is further used to indicate network performance corresponding to the first forwarding path that is from the network device to the network device in the first domain and that can be provided by the network device; and
the first obtaining unit is specifically configured to:
obtain the first forwarding path that has the network performance and that is from the network device to the network device in the first domain.

34. The network device according to claim 33, wherein the network device further comprises:
a second obtaining unit, configured to: when the network device determines that the first forwarding path to the network device in the first domain does not have the network performance, re-obtain, based on the network performance, a first forwarding path to the network device in the first domain; and
an updating unit, configured to update the mapping relationship based on the re-obtained first forwarding path to the network device in the first domain.

35. The network device according to claim 33, wherein the first packet comprises a network performance requirement of a second forwarding path, the second forwarding path is a forwarding path that is determined by the first network device and that is used to forward the first packet, and the first obtaining unit is specifically configured to:
obtain the first forwarding path that is from the network device to the network device in the first domain and that has the network performance matching the network performance requirement of the second forwarding path.

36. The network device according to claim 33, wherein if the network performance is load balancing, and the network device obtains a plurality of forwarding paths to the network device in the first domain,
the network device further comprises:
a selection unit, configured to select one of the plurality of forwarding paths as the first forwarding path based on load of each of the plurality of forwarding paths.

37. A network device, wherein the network device comprises a processor and a memory;
the memory is configured to store instructions; and
the processor is configured to execute the instructions in the memory, to perform the method according to any one of claims 1 to 8.

38. A network device, wherein the network device comprises a processor and a memory;
the memory is configured to store instructions; and
the processor is configured to execute the instructions in the memory, to perform the method according to any one of claims 9 to 23.

39. A computer-readable storage medium, comprising instructions, wherein when the instructions are run on a computer, the computer is enabled to perform the method according to any one of claims 1 to 19.
